(19) Europäisches Patentamt
European Patent Office
Office européen des brevets

(11) Veröffentlichungsnummer : **0 449 050 B1**

(12) # EUROPÄISCHE PATENTSCHRIFT

(45) Veröffentlichungstag der Patentschrift : **15.06.94 Patentblatt 94/24**

(21) Anmeldenummer : **91103984.0**

(22) Anmeldetag : **15.03.91**

(51) Int. Cl.$^5$ : **C08G 77/14,** C08G 77/46, C08G 77/38, C08L 83/06, C08L 83/12, C09D 183/06, C09D 183/12

(54) **Härtbare Organopolysiloxane mit über SiC-Gruppen gebundenen Oxyalkylenethergruppen, ihre Herstellung und Verwendung.**

(30) Priorität : **28.03.90 DE 4009889**

(43) Veröffentlichungstag der Anmeldung : **02.10.91 Patentblatt 91/40**

(45) Bekanntmachung des Hinweises auf die Patenterteilung : **15.06.94 Patentblatt 94/24**

(84) Benannte Vertragsstaaten : **BE DE FR GB IT NL**

(56) Entgegenhaltungen :
**EP-A- 0 018 624**
**EP-A- 0 284 863**
**EP-A- 0 329 279**
**US-A- 4 906 718**

(73) Patentinhaber : **Th. Goldschmidt AG**
**Goldschmidtstrasse 100**
**D-45127 Essen (DE)**

(72) Erfinder : **Weitemeyer, Christian, Dr.**
**Sundernholz 67**
**W-4300 Essen 1 (DE)**
Erfinder : **Döhler, Hardi**
**Klapperstrasse 19**
**W-4300 Essen 14 (DE)**

**EP 0 449 050 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft härtbare Polysiloxane mit über SiC-Gruppen gebundenen Oxyalkylenethergruppen. Die Erfindung betrifft insbesondere härtbare Polysiloxane mit über SiC-Gruppen gebundenen Oxyalkylenvinylethergruppen, wobei die Vinylgruppen durch Alkylreste substituiert sein können. Die Erfindung betrifft ferner ein Verfahren zur Herstellung dieser Verbindungen und deren Verwendung als vorzugsweise photochemisch härtbare Polysiloxane in Vergußmassen, als abhäsive Beschichtungsmittel für flächige Träger oder als modifizierende Additive in radikalisch, kationisch oder durch UV- oder Elektronenstrahlen härtbare Verbindungen.

Neben den bei UV-Einwirkung härtenden radikalisch polymerisierenden Systemen sind in den letzten Jahren kationisch härtbare, Epoxy- oder Vinyletherverbindungen enthaltende Systeme entwickelt worden, bei denen die Härtung insbesondere durch Diaryliodonium- und Triarylsulfoniumsalze initiiert wird. Der Vorteil der kationisch härtenden Systeme liegt in der Unempfindlichkeit der Härtungsreaktion gegen Luftsauerstoff, der raschen Filmhärtung und der Umweltfreundlichkeit dieser Systeme.

Kationisch härtende Systeme auf Basis epoxyfunktioneller Organopolysiloxane sind in zahlreichen Patentschriften beschrieben, von denen die US-PS 4 421 904 als Beispiel genannt wird. Eine zusammenfassende Darstellung kann der Zeitschrift Adhesives Age, 1989, 24 - 27, entnommen werden. In dieser Veröffentlichung sind handelsübliche Epoxygruppen enthaltende Siloxane zur Abhäsivbeschichtung von flächigen Trägern beschrieben.

Zur kationischen Polymerisation von - gegebenenfalls substituierten - Vinylethergruppen enthaltenden Verbindungen sind Katalysatoren mit geringer Säurestärke ausreichend. Anders als bei den Epoxidgruppen enthaltenden Verbindungen können deshalb neben den üblichen salzartigen Diaryliodonium- und Triarylsulfoniumverbindungen auch nicht-salzartige Verbindungen, wie z.B. Ketosulfone, als Photoinitiatoren verwendet werden.

Kationisch härtbare, Vinylethergruppen enthaltende Organopolysiloxane sind in der US-PS 4 617 238 beschrieben. In dieser Patentschrift ist ein Verfahren beschrieben, bei dem die Vinylethergruppe in das Organopolysiloxan durch Anlagerung (Hydrosilylierung) von Verbindungen mit einer Allyl- und einer Vinylethergruppe an eine SiH-Gruppe des Organopolysiloxans eingeführt wird. Dabei wird nur die Allylgruppe an die SiH-Gruppe addiert, während die Vinylethergruppe erhalten bleibt. Daraus ergibt sich, daß je SiH-Gruppe nur jeweils eine Vinylethergruppe in das Siloxanmolekül eingebaut werden kann.

Der vorliegenden Erfindung liegt die Aufgabe zugrunde, Organopolysiloxane bereitzustellen, die eine beliebige Anzahl von - gegebenenfalls substituierten - Vinylethergruppen aufweisen, ohne durch die im Ausgangsprodukt vorliegende Anzahl von SiH-Gruppen eingeschränkt zu sein. Hierdurch wird es möglich, die Härtungs- und Vernetzungseigenschaften in weiten Grenzen zu beeinflussen und zu steuern. Dabei sollen die Verbindungen möglichst einfach herzustellen sein. Bei der Herstellung soll möglichst auf die Verwendung toxischer Reaktionspartner, wie etwa auf den Einsatz von Chlorethylvinylether, verzichtet werden.

Die Forderung der Präsenz variabler Mengen - gegebenenfalls substituierter - Vinylethergruppen wird erfindungsgemäß durch die Verbindungen des Patentanspruchs 1 erfüllt. Ein Gegenstand der Erfindung sind somit härtbare Polysiloxane mit über SiC-Gruppen gebundenen Oxyalkylenethergruppen der allgemeinen durchschnittlichen Formel

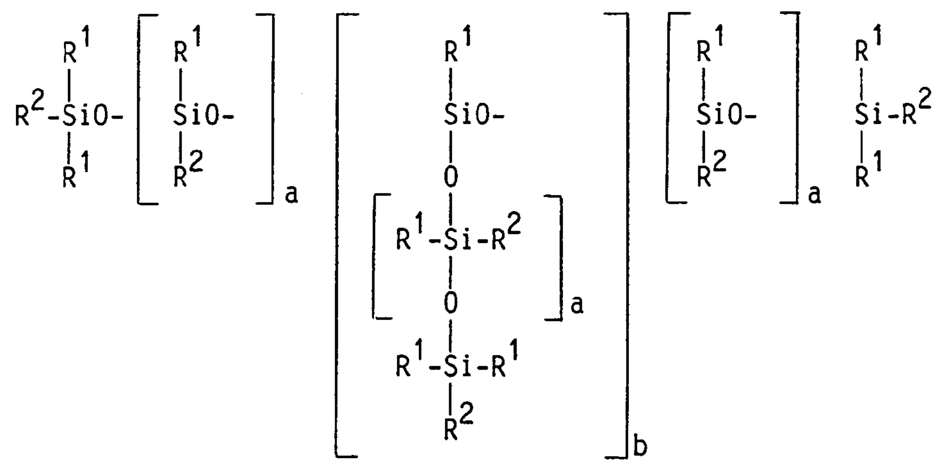

I

wobei die Reste

$R^1$ gleich oder verschieden sind und Alkylreste mit 1 bis 4 Kohlenstoffatomen oder Phenylreste bedeuten, jedoch mindestens 90 % der Reste $R^1$ Methylreste sind,

$R^2$ gleich oder verschieden sind und folgende Bedeutung haben:

a) Alkylreste mit 1 bis 20 Kohlenstoffatomen, Aryl- oder Aralkylreste,

b) Oxyalkylenetherreste der allgemeinen Formel

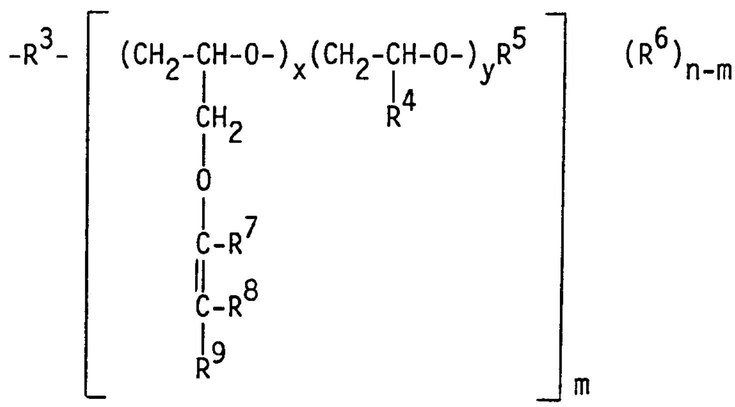

II

wobei

$R^3$ ein (n+1)-wertiger Rest ist, welcher mit einem Siliciumatom des Organopolysiloxans über eine -Si-C-Bindung und mit m Polyetherresten über jeweils eine -C-C-,

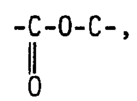

-C-O-C- oder -C-N-C-Bindung verknüpft ist,

$R^4$ ein Wasserstoff-, Alkyl- oder $R^5OCH_2$-Rest,

$R^5$, $R^6$ ein Wasserstoff-, Alkyl- oder Acylrest ist, wobei die Reste $R^4$, $R^5$ und $R^6$ im Molekül unterschiedliche Bedeutung haben können,

$R^7$, $R^8$ und $R^9$ Wasserstoff- oder Alkylreste mit 1 bis 8 Kohlenstoffatomen sind oder wobei die Reste $R^7$ und $R^8$ oder $R^8$ und $R^9$ jeweils gemeinsam Bestandteil eines cyclischen, nichtaromatischen Kohlenwasserstoffrestes mit 5 oder 6 Kohlenstoffatomen sein können,

n einen Wert von 1 bis 5 hat,

m einen Wert von 1 bis 5 hat, jedoch nicht größer als n sein darf,

x im durchschnittlichen Molekül einen Wert von 1 bis 100 und

y im durchschnittlichen Molekül einen Wert von 0 bis 100 hat, wobei $1 \leqq x+y < 150$ ist,

a einen Wert von 1 bis 1000 und

b einen Wert von 0 bis 10 hat,

mit der Maßgabe, daß im durchschnittlichen Organopolysiloxanmolekül mindestens 1 Rest $R^2$ ein Oxyalkylenetherrest der Formel II ist.

Die Reste $R^1$ können im Molekül gleich oder verschieden sein und sind Alkylreste mit 1 bis 4 Kohlenstoffatomen oder Phenylreste. Die Alkylreste können somit Methyl-, Ethyl-, Propyl- oder Butylreste sein. Es muß jedoch die Bedingung erfüllt sein, daß im durchschnittlichen Molekül wenigstens 90 % der Reste $R^1$ Methylreste sind. Besonders bevorzugt sind Organopolysiloxane, bei denen alle Reste $R^1$ Methylreste sind. Zur Beeinflussung der abhäsiven Eigenschaften kann es jedoch auch von Vorteil sein, wenn bis zu 10 % der Reste $R^1$ Phenylgruppen sind.

Die Reste $R^2$ können wie die Reste $R^1$ im Molekül gleich oder verschieden sein. Sie können dabei a) Alkylreste mit 1 bis 20 Kohlenstoffatomen, Aryl- oder Aralkylreste oder b) Oxyalkylenetherreste der allgemeinen Formel II sein, wobei die Bedingung erfüllt sein muß, daß im durchschnittlichen Organopolysiloxanmolekül der Formel I mindestens ein Rest $R^2$ die Bedeutung eines Oxyalkylenetherrestes der Formel II hat. Vorzugsweise sind 1 bis 30 der Reste $R^3$ im durchschnittlichen Molekül Oxyalkylenetherreste. Besonders bevorzugt sollen 2 bis 15 Oxyalkylenetherreste vorhanden sein.

Hat ein Rest $R^2$ die Bedeutung eines Alkylrestes mit 1 bis 20 Kohlenstoffatomen, kann er die gleiche Be-

deutung wie der Rest $R^1$ annehmen. Er kann jedoch auch mehr als 4 Kohlenstoffatome aufweisen und geradkettig oder verzweigt sein. Beispiele solcher Reste sind der Octyl-, iso-Octyl-, Nonyl-, Decyl-, Dodecyl- und der Hexadecylrest. Die Alkylreste können substituiert sein.

Hat $R^2$ die Bedeutung eines Arylrestes, ist der Phenylrest besonders bevorzugt. Weitere Beispiele für Arylreste sind der Tolyl- und der Xylylrest.

Als Aralkylreste sind Phenylethyl- und 2-Phenylpropylreste bevorzugt.

Das erfindungsgemäße härtbare Organopolysiloxan in besonderem Maße kennzeichnend sind die Oxyalkylenetherreste der allgemeinen Formel

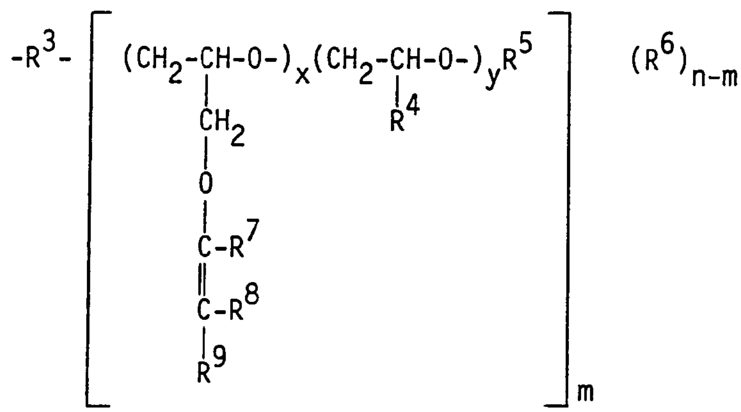

II

Die Oxyalkylenetherreste sind, wie sich aus der Formel II ergibt, durch den Rest $R^3$ mit dem Polysiloxanmolekül verbunden. $R^3$ ist ein (n+1)-wertiger Rest. Er verbrückt das Polysiloxan mit einem Polyetherrest. Dabei ist der Rest $R^3$ mit einem Siliciumatom des Organopolysiloxans über eine -Si-C-Bindung und mit m Polyetherresten über jeweils eine -C-C-,

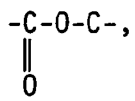

-C-O-C- oder -C-N-C-Bindung verknüpft.

Diese Art der Verknüpfung kann für n = 1 schematisch so dargestellt werden:

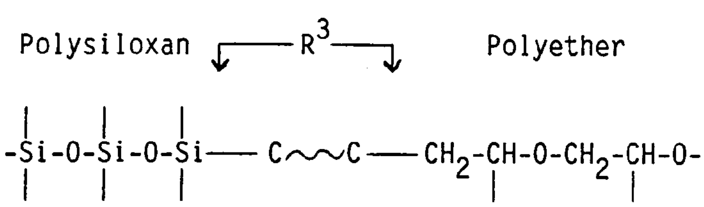


oder

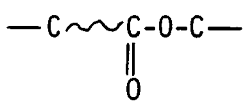

oder

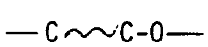

oder

$$—C\sim\sim C-N—$$

$R^3$ ist somit bei einer Verknüpfung mit den Polyetherresten

i) durch eine -C-C-Bindung ein geradkettiger oder verzweigter Kohlenwasserstoffrest,

ii) durch eine -C-O-C-Bindung ein Kohlenwasserstoffoxyrest mit bis zu 5 Oxyresten, wobei die Kohlenstoffkette durch Sauerstoff unter Etherbildung unterbrochen sein kann,

iii) durch eine

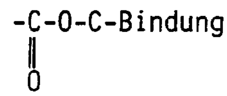

ein Kohlenwasserstoffcarboxyrest mit bis zu 3 Carboxygruppen,

iv) durch eine -C-N-C-Bindung ein Kohlenwasserstoffrest mit einem mono- oder disubstituierten Aminorest,

wobei in jedem Falle ein Kohlenstoffatom des Kohlenwasserstoffrestes mit einem Si-Atom des Polysiloxans verbunden ist.

Beispiele für die Reste $R^3$ sind:

<u>-C-C-Verknüpfung:</u>

$$-(CH_2)_3- , -(CH_2)_4-$$

Die Art der Verknüpfung wird erhalten, wenn Alkyllithiumverbindungen an Alkylenoxide der Formeln

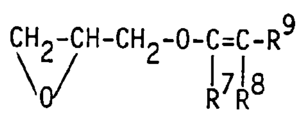

und

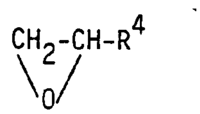

addiert werden.

<u>-C-O-C-Verknüpfung:</u>

$$-(CH_2)_3-O-, -(CH_2)_{11}-O-,$$

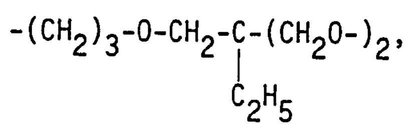

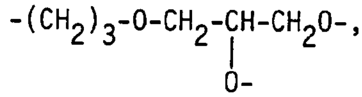, 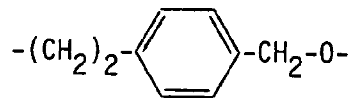,

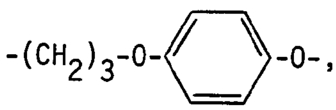, 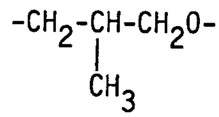

Die -C-O-C-Verknüpfung entsteht bei der Anlagerung der vorgenannten Alkylenoxide an ein- oder mehrwertige Alkohole oder Phenole.

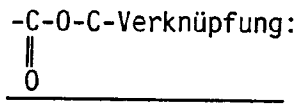


$-(CH_2)_{10}-COO-$,

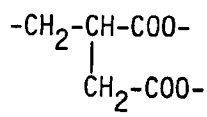

Die

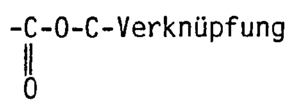


entsteht bei der Anlagerung der vorgenannten Alkylenoxide an ein- oder mehrwertige Carbonsäuren.

Lagert man die Alkylenoxide an Hydroxycarbonsäuren an, erhält man sowohl -C-O-C- als auch

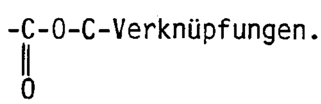


-C-N-C-Verknüpfung:

$-(CH_2)_3-N<$,

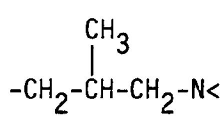, 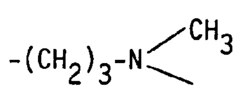

Die -C-N-C-Verknüpfung entsteht bei der Anlagerung der vorgenannten Alkylenoxide an mono- oder dialkylsubstituierte Amine.

Aus diesen Beispielen ist ersichtlich, daß $R^3$ in weiten Bereichen hinsichtlich seiner Struktur variabel ist.

$R^4$ ist ein Wasserstoff-, Alkyl- oder $R^5OCH_2$-Rest. Auch dieser Rest kann innerhalb des polymeren Moleküls unterschiedliche Bedeutung haben. Als Alkylrest kann $R^4$ insbesondere 1 bis 12 Kohlenstoffatome aufweisen. Vorzugsweise ist $R^4$ ein Wasserstoff-, Methyl-, Ethyl-, $HOCH_2$- oder $CH_3OCH_2$-Rest.

Die Reste $R^5$ und $R^6$ sind gleich oder verschieden und bedeuten Wasserstoff-, Alkyl- oder Acylreste. Als Alkylreste sind insbesondere die niederen Alkylreste mit 1 bis 4 Kohlenstoffatomen bevorzugt. Als Acylreste sind solche mit 2 bis 7 Kohlenstoffatomen geeignet. Bevorzugt ist der Acetylrest.

Die Reste $R^7$, $R^8$ und $R^9$ sind Wasserstoff- oder Alkylreste. Dabei können die Reste $R^7$ und $R^8$ bzw. die Reste $R^8$ und $R^9$ jeweils gemeinsam Bestandteil eines cyclischen, nichtaromatischen Kohlenwasserstoffrestes mit 5 oder 6 Kohlenstoffatomen sein. Beispiele sind

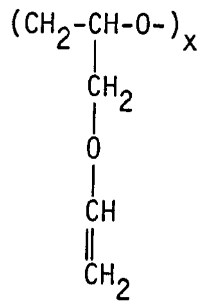

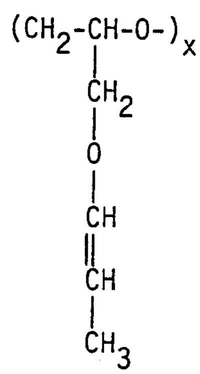

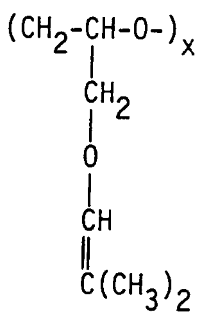

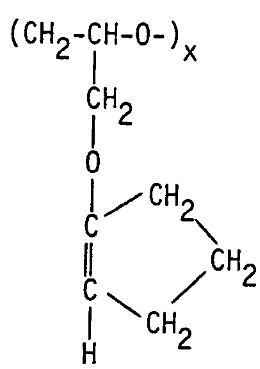

Vorzugsweise ist mindestens einer der Reste $R^7$, $R^8$, $R^9$ ein Alkylrest. Besonders bevorzugt ist der Rest $R^8$ und/oder der Rest $R^9$ ein Alkylrest, vorzugsweise ein Methylrest, und der Rest $R^7$ ein Wasserstoffrest.

Sind die Reste $R^8$ und $R^9$ verschieden, besteht die Möglichkeit der Ausbildung cis-, trans-isomerer Verbindungen. Beide Formen sind jedoch im Sinne der Erfindung brauchbar.

Der Index n hat einen Wert von 1 bis 5. m hat einen Wert von 1 bis 5, m darf jedoch nicht größer als n sein. Vorzugsweise ist $n = m$.

x hat im durchschnittlichen Molekül einen Wert von 1 bis 100, vorzugsweise einen Wert von 1 bis 25, insbesondere einen Wert von 2 bis 4.

y hat im durchschnittlichen Molekül einen Wert von 0 bis 100, wobei $1 \le x+y < 150$ sein muß. Vorzugsweise ist $1 < x+y < 150$.

Das Produkt $m \cdot x$ hat vorzugsweise einen Wert von > 1, insbesondere 2 bis 25; das Produkt $m \cdot y$ einen Wert von 0 bis 25.

Die Indices a und b kennzeichnen die Struktur des Polysiloxans. a definiert die Zahl der difunktionellen Si-Einheiten und hat einen Wert von 1 bis 1000. b gibt die Anzahl der trifunktionellen Einheiten an und hat einen Wert von 0 bis 10. Vorzugsweise hat a einen Wert von 5 bis 200 und b einen Wert von 0 bis 2, wobei der Wert 0 für b besonders bevorzugt ist.

Beispiele für Verbindungen der Formel I sind:

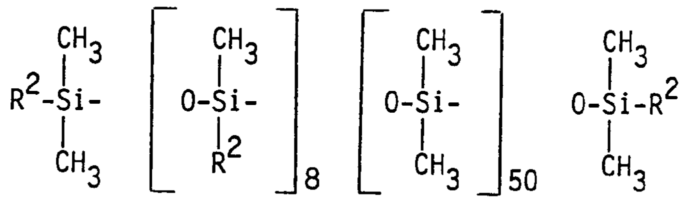

$R^2$ = 20 %

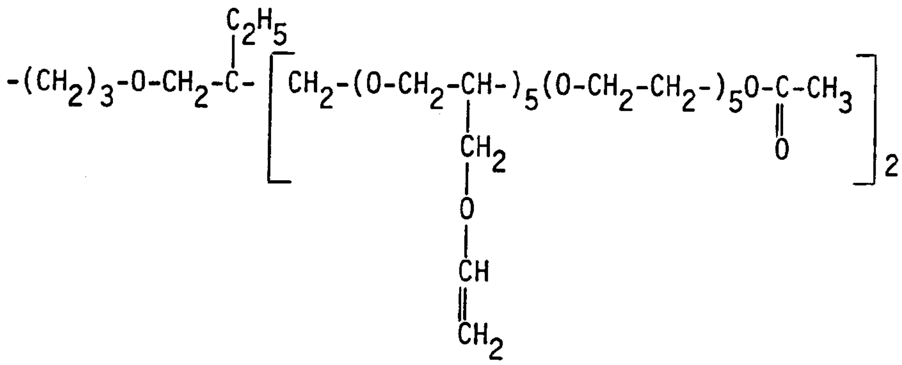

80 %

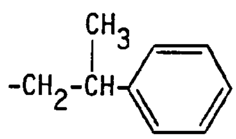

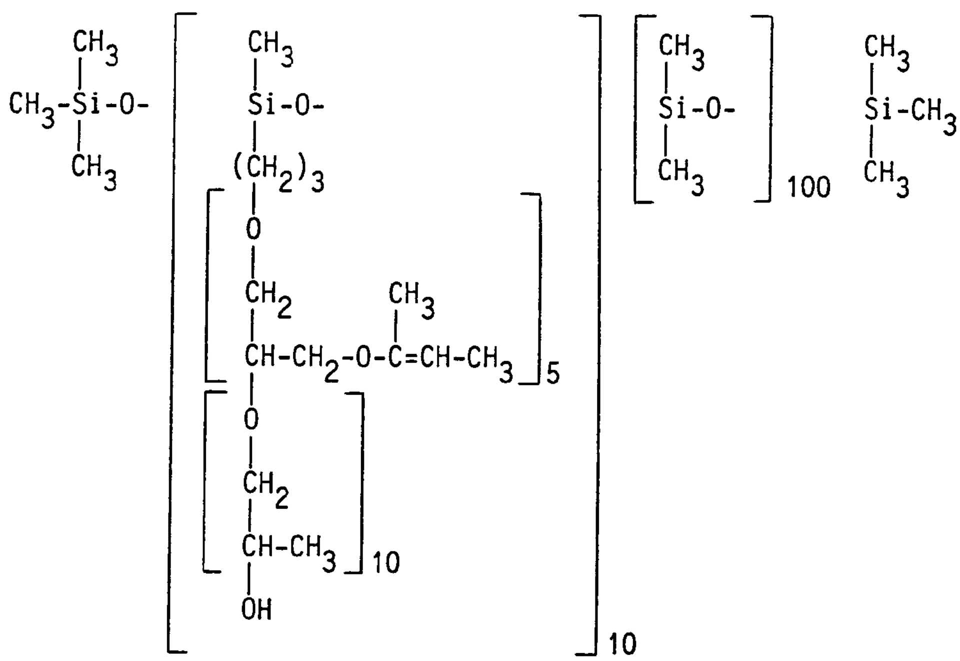

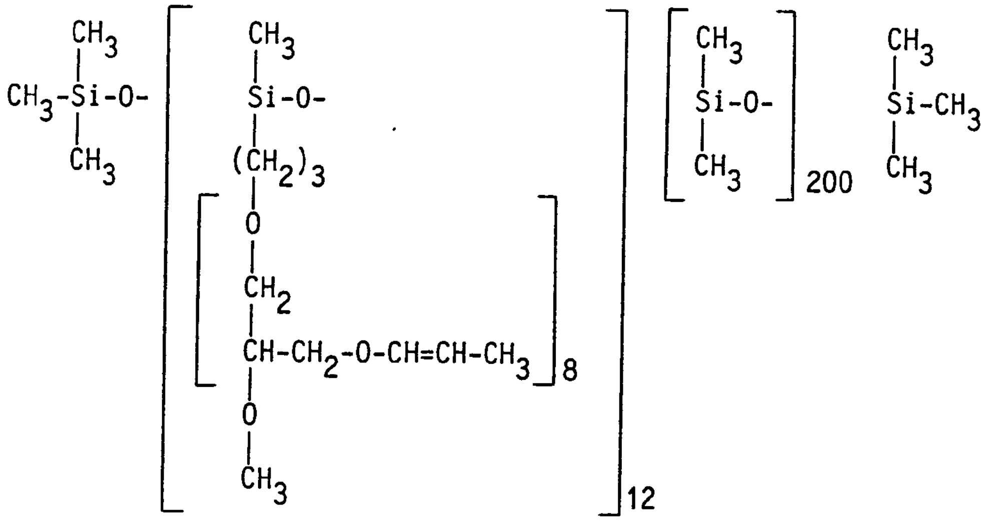

Beispiele für Oxyalkylenetherreste der Formel II sind:

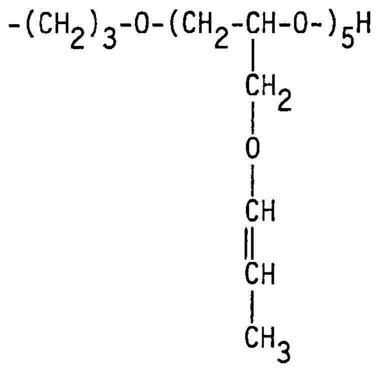

;

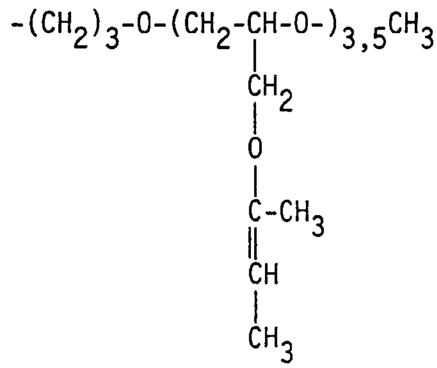

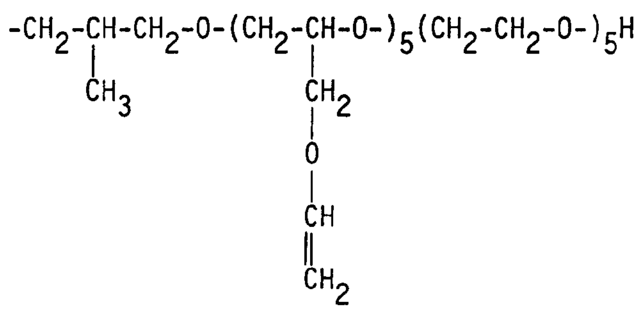

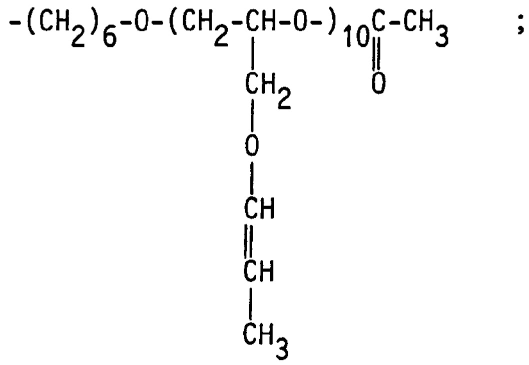

;

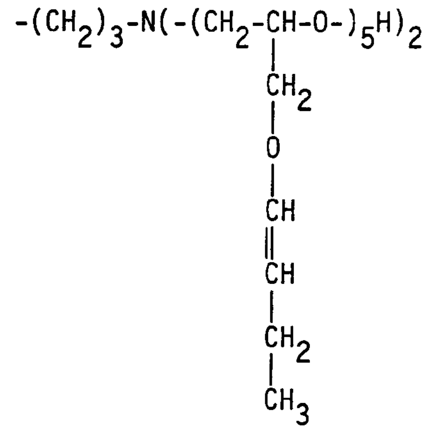

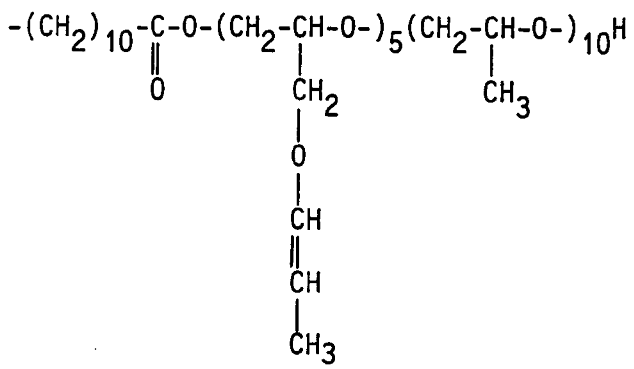

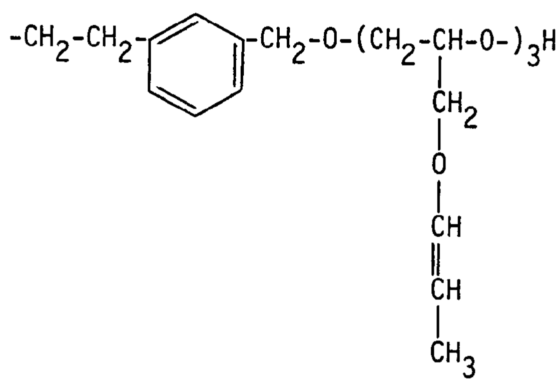

Ein weiterer Gegenstand der Erfindung besteht in dem Verfahren zur Herstellung der erfindungsgemäßen modifizierten Organopolysiloxane, welches dadurch gekennzeichnet ist, daß man einen Polyoxyalkylenether der allgemeinen Formel

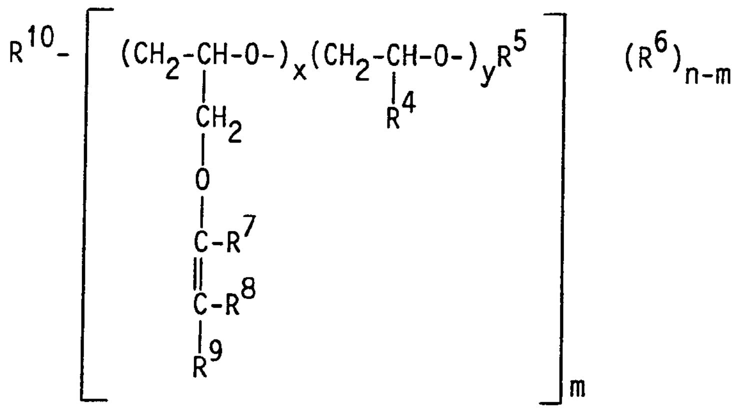 III

wobei

$R^{10}$ ein n-wertiger Rest mit einer zur Anlagerung an eine SiH-Gruppe befähigten olefinischen Doppelbindung ist, der mit m Polyetherresten über jeweils eine -C-C-, -C-O-C-,

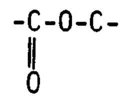

oder -C-N-C-Bindung verknüpft ist, und

$R^4$, $R^5$, $R^6$, $R^7$, $R^8$, $R^9$, n, m, x und y die bereits angegebene Bedeutung bzw. Werte haben,
an ein Polysiloxan der allgemeinen Formel

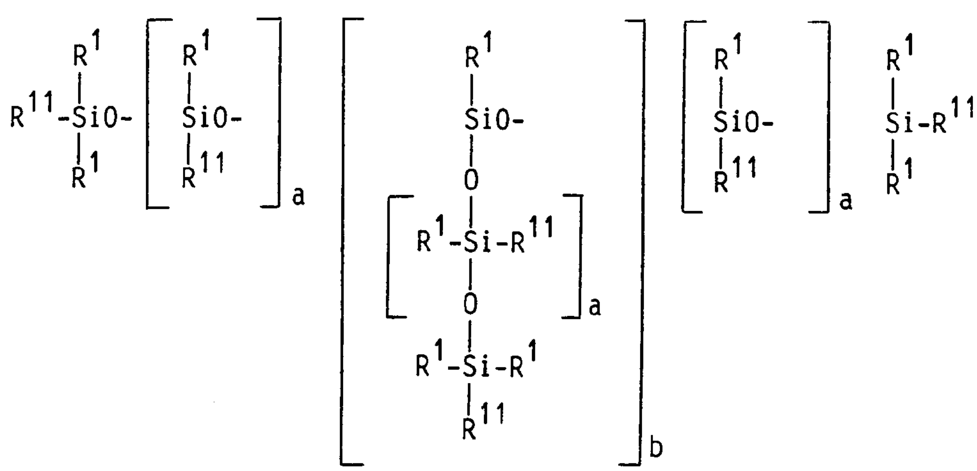 IV

wobei die Reste

$R^1$ gleich oder verschieden sind und Alkylreste mit 1 bis 4 Kohlenstoffatomen oder Phenylreste bedeuten, jedoch mindestens 90 % der Reste $R^1$ Methylreste sind,

$R^{11}$ gleich oder verschieden sind und folgende Bedeutung haben:

a) Alkylreste mit 1 bis 20 Kohlenstoffatomen oder Aryl- oder Alkarylreste,

b) Wasserstoffreste,

mit der Maßgabe, daß im durchschnittlichen Organopolysiloxanmolekül mindestens 1 Rest $R^{11}$ ein Wasserstoffatom ist,

die Indices a und b die bereits angegebenen Werte haben,
in Gegenwart von Übergangsmetallen oder Übergangsmetallkomplexen bei Temperaturen von etwa 25 bis 170°C gegebenenfalls in Gegenwart von Lösungsmitteln anlagert.

In dem Polyether der Formel III ist der Rest $R^{10}$ bei einer Verknüpfung mit den Polyetherresten

i) durch eine -C-C-Bindung ein geradkettiger oder verzweigter Kohlenwasserstoffrest,

ii) durch eine -C-O-C-Bindung ein Kohlenwasserstoffoxyrest mit bis zu 5 Oxyresten, wobei die Kohlenstoffkette durch Sauerstoff unter Etherbildung unterbrochen sein kann,

iii) durch eine

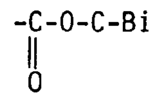 Bindung

ein Kohlenwasserstoffcarboxyrest mit bis zu 3 Carboxygruppen,

iv) durch eine -C-N-C-Bindung ein Kohlenwasserstoffrest mit einem mono- oder disubstituierten Aminorest,

wobei in jedem Falle der Kohlenwasserstoffrest eine zur Anlagerung an SiH befähigte olefinische Doppelbindung aufweist.

Der Rest $R^{10}$ entspricht somit dem Rest $R^3$ mit dem Unterschied, daß er eine olefinische Doppelbindung für die Hydrosilylierungsreaktion aufweisen muß. Dies zeigt ein Vergleich der Reste $R^3$ und $R^{10}$:

| $R^3$ | $R^{10}$ |
|---|---|
| $-(CH_2)_3-O-$ | $CH_2=CH-CH_2-O-$ |
| 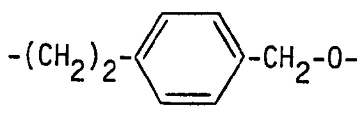 | 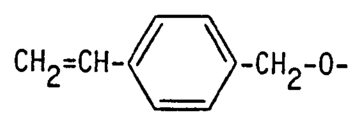 |
| 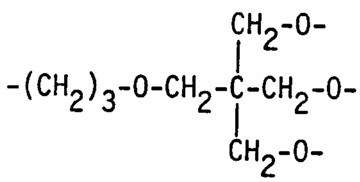 | 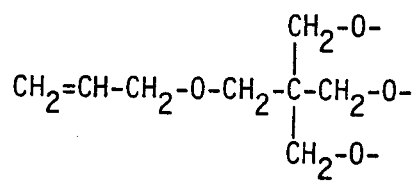 |
| 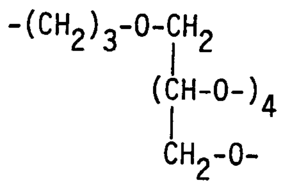 | 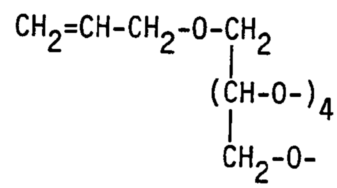 |
| $-(CH_2)_{10}-COO-$ | $CH_2=CH-(CH_2)_8-COO-$ |
| $-(CH_2)_3-N<$ | $CH_2=CH-CH_2-N<$ |

$R^{11}$ ist im Molekül gleich oder verschieden und kann Alkylreste mit 1 bis 20 Kohlenstoffatomen (entsprechend $R^2$, Variante a)) oder einen Wasserstoffrest bedeuten, wobei mindestens ein Rest $R^{11}$ ein Wasserstoffrest sein muß. Entsprechend den gewünschten erfindungsgemäßen Verbindungen sollen 1 bis 30, insbesondere 2 bis 15 $R^{11}$-Reste Wasserstoffreste sein.

Die Hydrosilylierungsreaktion läuft in Gegenwart an sich bekannter Übergangsmetalle oder Übergangsmetallkomplex-Katalysatoren ab. Beispiele solcher Katalysatoren sind Hexachloroplatinsäure oder Platinbeladene Aktivkohle.

Die Reaktionstemperatur beträgt etwa 25 bis 170°C, insbesondere 50 bis 150°C. Als Lösungsmittel kommen übliche inerte Lösungsmittel, wie Toluol, Hexan, Diglykoldimethylether, in Frage.

Ein weiterer Gegenstand der Erfindung besteht in der Verwendung der erfindungsgemäßen modifizierten Organopolysiloxane als vorzugsweise photochemisch härtbare Polysiloxane in Vergußmassen, als abhäsive Beschichtungsmittel für flächige Träger oder als modifizierendes Additiv in radikalisch, kationisch oder durch UV- oder Elektronenstrahlen härtbare Verbindungen.

Die Aushärtung der erfindungsgemäßen Verbindungen erfolgt vorzugsweise durch UV-Strahlen in Gegenwart von Katalysatoren, wie salzartigen Diaryliodonium- oder Triarylsulfoniumverbindungen oder nichtsalzartigen Verbindungen, wie Ketosulfonen. Beispiele solcher Verbindungen sind

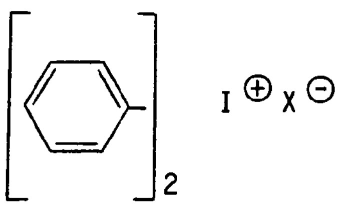
;
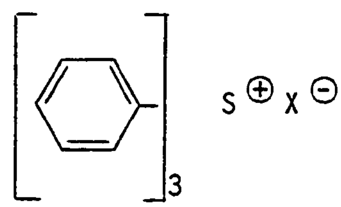

$X^{\ominus} = PF_6^{\ominus}$ ; $BF_4^{\ominus}$ ; $SbF_6^{\ominus}$

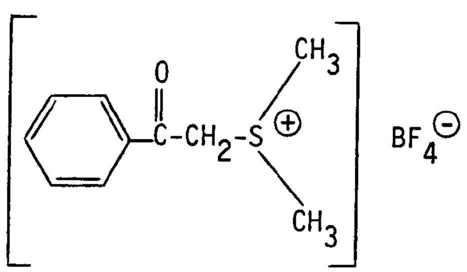
;
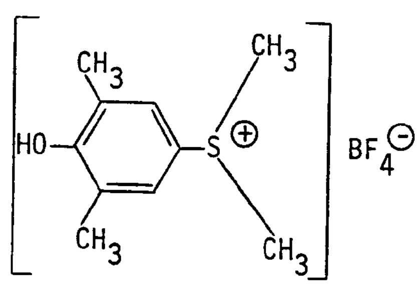

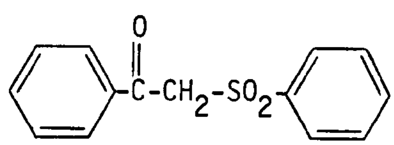
;
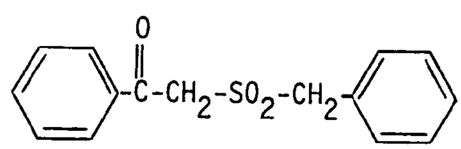

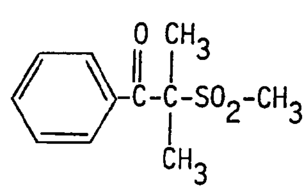
;
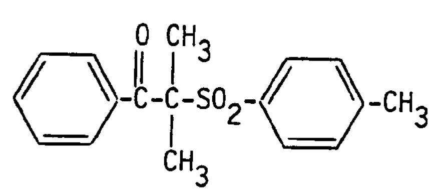

Die erfindungsgemäßen Verbindungen härten in kürzester Zeit (Bruchteile von Sekunden bis zu einigen Sekunden) zu klebfreien, flexiblen oder harten Produkten aus. Gegenüber den bekannten Verbindungen des Standes der Technik haben sie den Vorteil der Anordnung einer praktisch beliebigen Anzahl von - gegebenenfalls substituierten - Vinyletherresten längs der Kette des polymeren Moleküls. Hierdurch kann die Aushärtungsgeschwindigkeit und die Vernetzungsdichte den sich aus der jeweiligen Verwendung ergebenden Anforderungen angepaßt werden.

Bei der Verwendung können die Verbindungen mit üblichen Zusatzstoffen, wie Modifizierungsmitteln, Pigmenten, Füllstoffen, Flammschutzmitteln und dergleichen, vermischt werden.

Die härtbaren Zusammensetzungen können auf solche Substrate wie Metall, Gummi, Kunststoff, geformte Teile oder Filme, Papier, Holz, Glasgewebe, Zement, Keramik usw. aufgebracht werden.

Einige der Anwendungen, in denen die härtbaren Zusammensetzungen der vorliegenden Erfindung Verwendung finden können, sind z.B. Schutz-, dekorative und isolierende Beschichtungen, Massen zum Einbetten, Druckfarbton, Abdichtungsmittel, Klebstoffe, Photoresistlacke, Drahtisolierung, Textilbeschichtungen, Schichtstoffe, imprägnierte Bänder, Druckplatten usw.

In den folgenden Beispielen werden die bevorzugten Herstellungsverfahren noch weiter erläutert und die Eigenschaften der erfindungsgemäßen Verbindungen durch anwendungstechnische Versuche gezeigt.

Beispiel 1

In einem Rührbehälter werden 860 g (5 Mol) einer Verbindung, die nach dem $^1$H-NMR die Formel

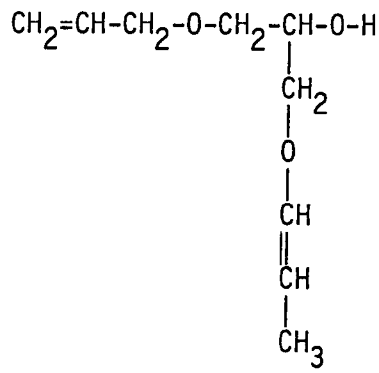

besitzt, mit 38 mg (5 ppm Platin, bezogen auf den Gesamtansatz) Hexachloroplatinsäure x 6 $H_2O$ vorgelegt und während 2 Stunden bei 120°C 1942 g (1 Mol) eines Siloxans der durchschnittlichen Formel

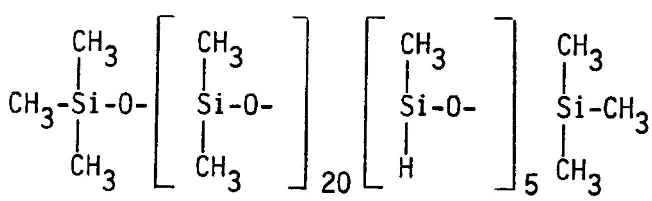

zugetropft. Das Reaktionsgemisch wird bei 100°C solange gerührt, bis mit einer Lösung von 5 % Natriumbutylat in Butanol kein Wasserstoff mehr freigesetzt wird. Das Produkt wird unter vermindertem Druck bis 100°C destilliert. Es werden 2745 g (98 % der Theorie) eines leicht gelblichen mittelviskosen Produktes erhalten, das nach dem $^1$H-NMR die durchschnittliche Formel

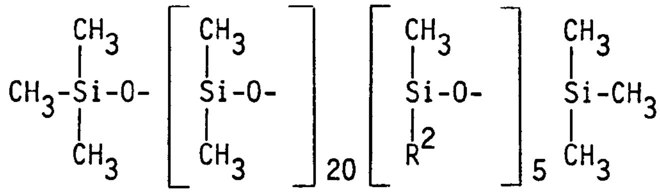

mit

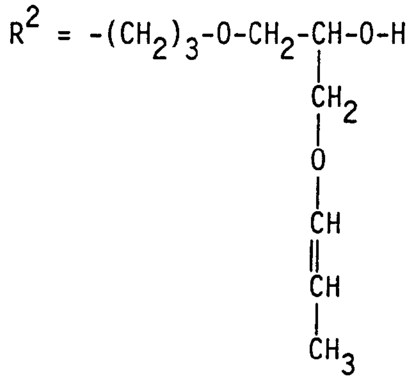

besitzt.

Beispiel 2

In einem Rührbehälter werden 600 g (0,5 Mol) einer Verbindung, die nach dem $^1$H-NMR die durchschnittliche Formel

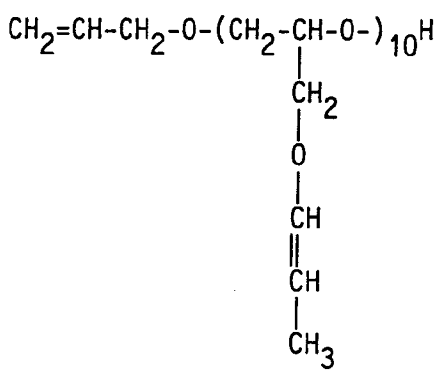

besitzt, mit 29 mg (5 ppm Platin, bezogen auf den Gesamtansatz) Hexachloroplatinsäure x 6 $H_2O$ vorgelegt und während 2 Stunden bei 120°C 1526 g (0,1 Mol) eines Siloxans der durchschnittlichen Formel

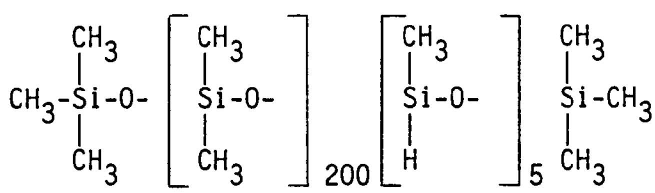

zugetropft. Das Reaktionsgemisch wird bei 100°C solange gerührt, bis mit einer Lösung von 5 % Natriumbutylat in Butanol kein Wasserstoff mehr freigesetzt wird. Das Produkt wird unter vermindertem Druck bis 100°C destilliert. Es werden 1977 g (93 % der Theorie) eines leicht gelblichen mittelviskosen Produktes erhalten, das nach dem $^1$H-NMR die durchschnittliche Formel

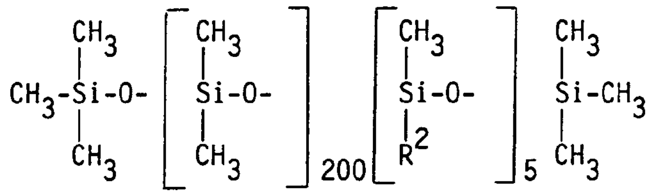

mit

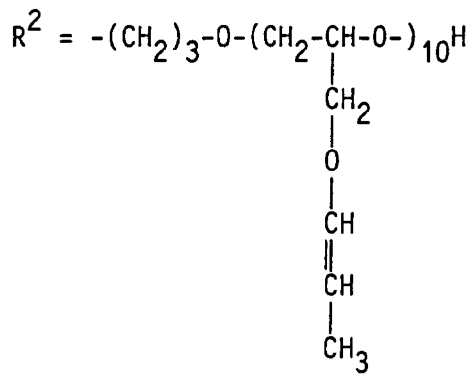

besitzt.

<u>Beispiel 3</u>

In einem Rührbehälter werden 1083 g (0,3 Mol) einer Verbindung, die nach dem $^1$H-NMR die durchschnittliche Formel

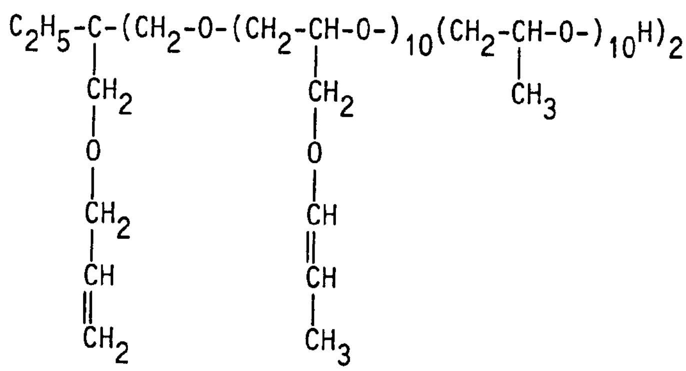

besitzt, mit 45 mg (5 ppm Platin, bezogen auf den Gesamtansatz) Hexachloroplatinsäure x 6 $H_2O$ vorgelegt und während 2 Stunden bei 120°C 2254 g (0,1 Mol) eines Siloxans der durchschnittlichen Formel

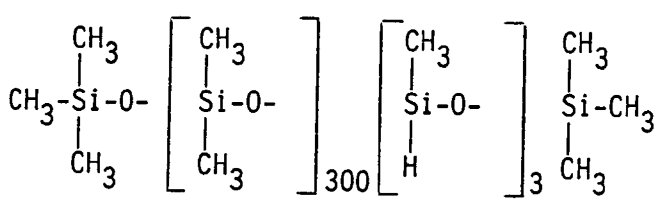

zugetropft. Das Reaktionsgemisch wird bei 100°C solange gerührt, bis mit einer Lösung von 5 % Natriumbutylat in Butanol kein Wasserstoff mehr freigesetzt wird. Das Produkt wird unter vermindertem Druck

bis 100°C destilliert. Es werden 3137 g (94 % der Theorie) eines leicht gelblichen viskosen Produktes erhalten, das nach dem $^1$H-NMR die durchschnittliche Formel

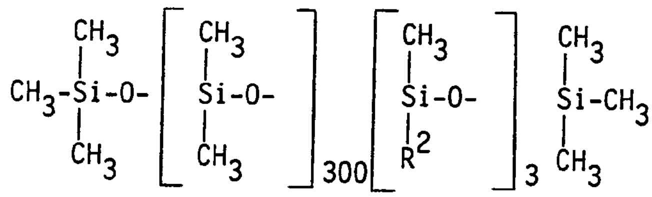

mit

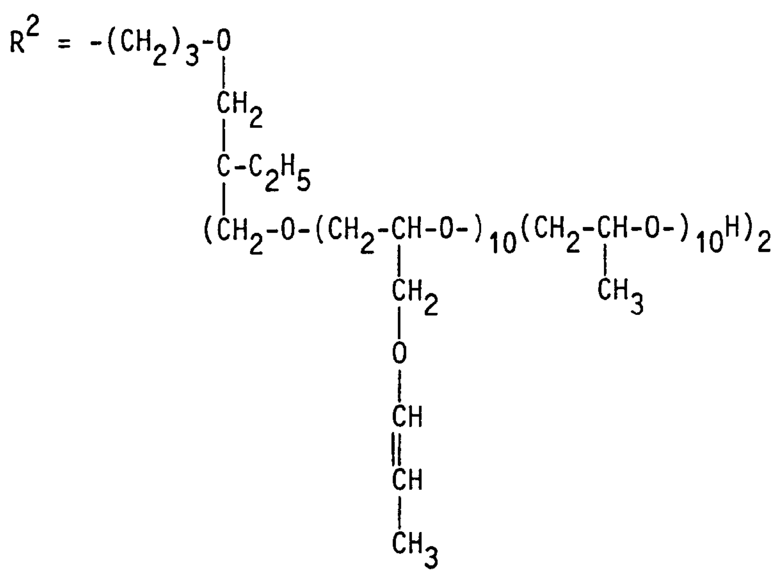

besitzt.

Beispiel 4

In einem Rührbehälter werden 172 g (1 Mol) einer Verbindung, die nach dem $^1$H-NMR die Formel

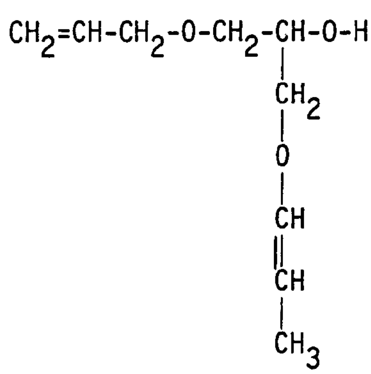

besitzt, mit 13 mg (5 ppm Platin, bezogen auf den Gesamtansatz) Hexachloroplatinsäure x 6 $H_2O$ vorgelegt und während 2 Stunden bei 120°C 816 g (0,1 Mol) eines Siloxans der durchschnittlichen Formel

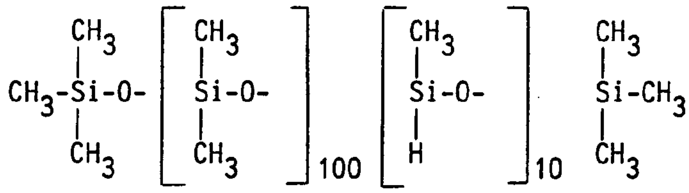

zugetropft. Das Reaktionsgemisch wird bei 100°C solange gerührt, bis mit einer Lösung von 5 % Natriumbutylat in Butanol kein Wasserstoff mehr freigesetzt wird. Das Produkt wird unter vermindertem Druck bis 100°C destilliert. Es werden 899 g (91 % der Theorie) eines leicht gelblichen mittelviskosen Produktes erhalten, das nach dem $^1$H-NMR die durchschnittliche Formel

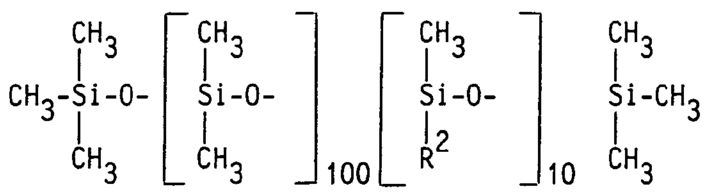

mit

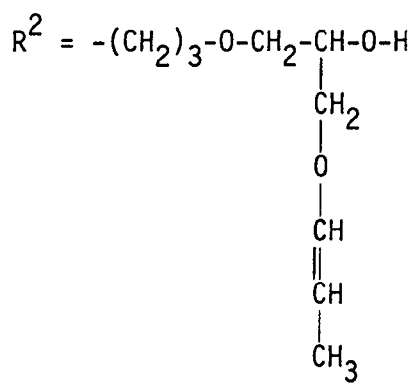

besitzt.

Beispiel 5

In einem Rührbehälter werden 1200 g (0,5 Mol) einer Verbindung, die nach dem $^1$H-NMR die durchschnittliche Formel

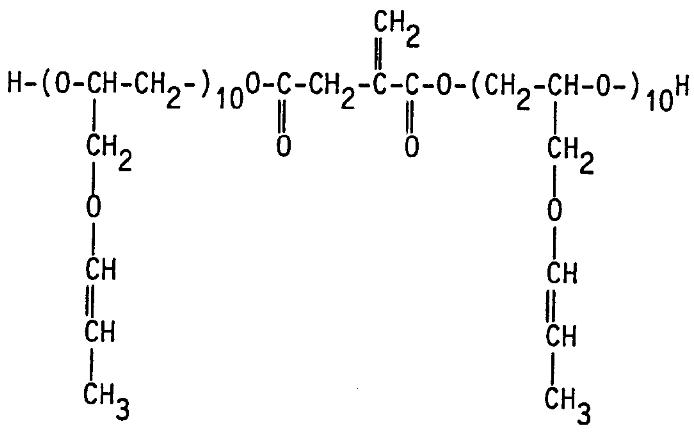

besitzt, mit 37 mg (5 ppm Platin, bezogen auf den Gesamtansatz) Hexachloroplatinsäure x 6 $H_2O$ vorgelegt und während 2 Stunden bei 120°C 1526 g (0,1 Mol) eines Siloxans der durchschnittlichen Formel

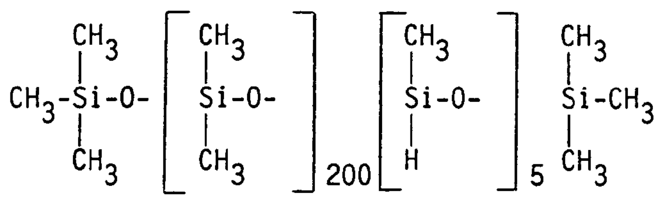

zugetropft. Das Reaktionsgemisch wird bei 100°C solange gerührt, bis mit einer Lösung von 5 % Natriumbutylat in Butanol kein Wasserstoff mehr freigesetzt wird. Das Produkt wird unter vermindertem Druck bis 100°C destilliert. Es werden 2453 g (90 % der Theorie) eines leicht gelblichen mittelviskosen Produktes erhalten, das nach dem $^1$H-NMR die durchschnittliche Formel

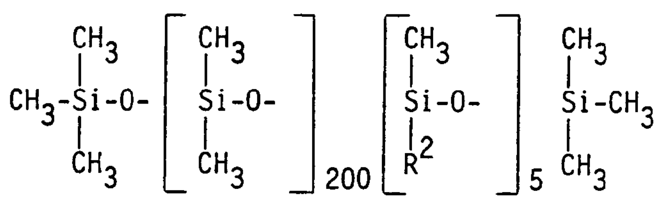

mit

$R^2$ =

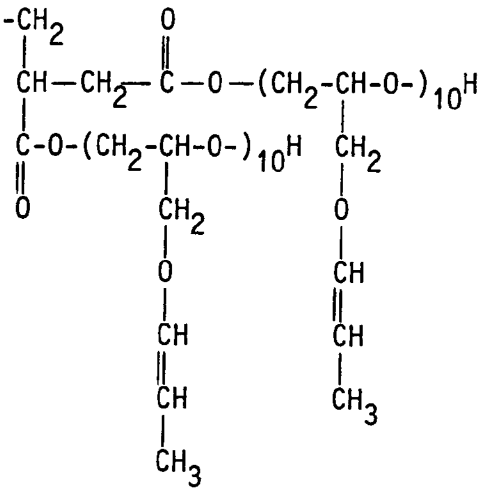

besitzt.

<u>Beispiel 6</u>

In einem Rührbehälter werden 620 g (0,5 Mol) einer Verbindung, die nach dem $^1$H-NMR die durchschnittliche Formel

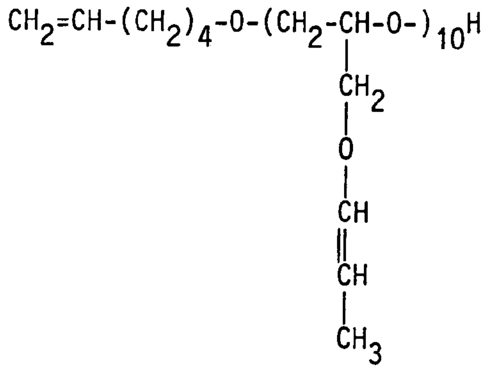

besitzt, mit 29 mg (5 ppm Platin, bezogen auf den Gesamtansatz) Hexachloroplatinsäure x 6 $H_2O$ vorgelegt und während 2 Stunden bei 120°C 1526 g (0,1 Mol) eines Siloxans der durchschnittlichen Formel

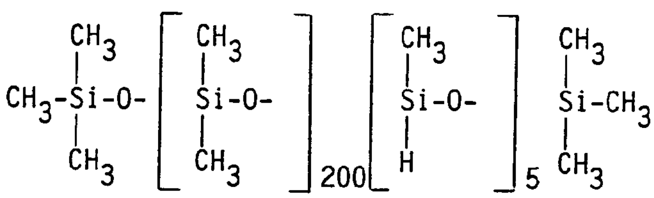

zugetropft. Das Reaktionsgemisch wird bei 100°C solange gerührt, bis mit einer Lösung von 5 % Natriumbutylat in Butanol kein Wasserstoff mehr freigesetzt wird. Das Produkt wird unter vermindertem Druck bis 100°C destilliert. Es werden 1995 g (93 % der Theorie) eines leicht gelblichen mittelviskosen Produktes erhalten, das nach dem $^1$H-NMR die durchschnittliche Formel

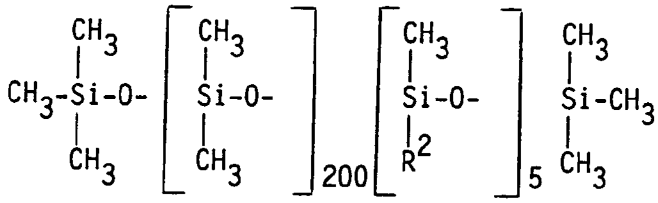

mit

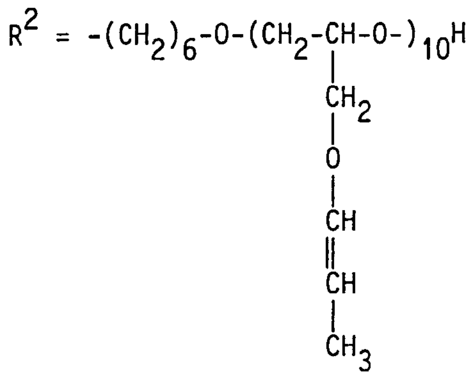

besitzt.

Beispiel 7

In einem Rührbehälter werden 605 g (0,5 Mol) einer Verbindung, die nach dem $^1$H-NMR die durchschnittliche Formel

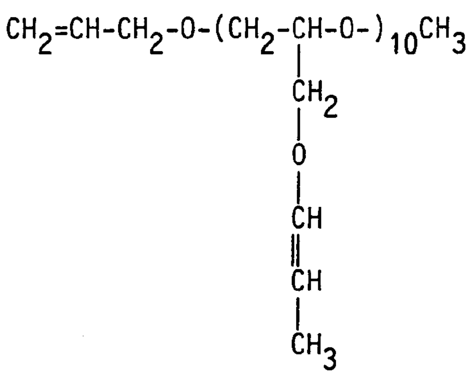

besitzt, mit 24 mg (5 ppm Platin, bezogen auf den Gesamtansatz) Hexachloroplatinsäure x 6 $H_2O$ vorgelegt und während 2 Stunden bei 120°C 1156 g (0,1 Mol) eines Siloxans der durchschnittlichen Formel

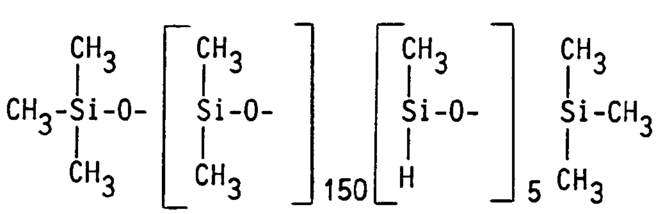

zugetropft. Das Reaktionsgemisch wird bei 100°C solange gerührt, bis mit einer Lösung von 5 % Natriumbutylat in Butanol kein Wasserstoff mehr freigesetzt wird. Das Produkt wird unter vermindertem Druck

bis 100°C destilliert. Es werden 1620 g (92 % der Theorie) eines leicht gelblichen mittelviskosen Produktes erhalten, das nach dem $^1$H-NMR die durchschnittliche Formel

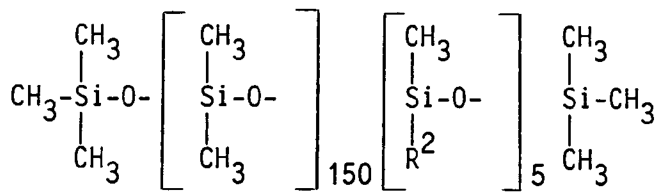

mit

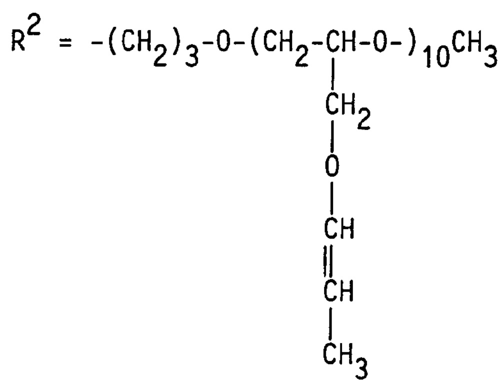

besitzt.

Beispiel 8

In einem Rührbehälter werden 686 g (0,7 Mol) einer Verbindung, die nach dem $^1$H-NMR die durchschnittliche Formel

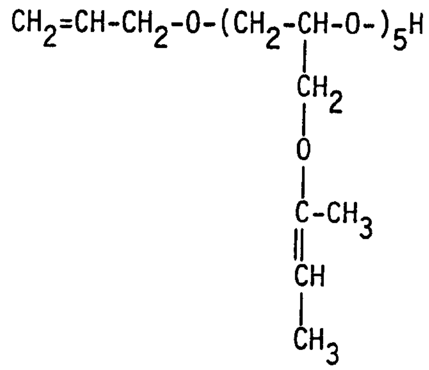

besitzt, und 212 g (2 Mol) α-Methylstyrol mit 34 mg (5 ppm Platin, bezogen auf den Gesamtansatz) Hexachloroplatinsäure x 6 $H_2O$ vorgelegt und während 2 Stunden bei 120°C 1854 g (0,1 Mol) eines Siloxans der durchschnittlichen Formel

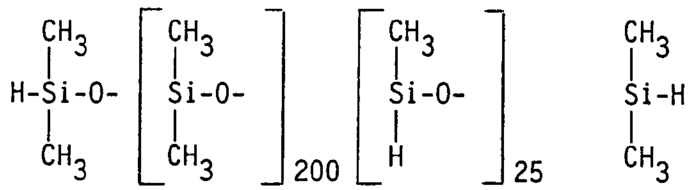

zugetropft. Das Reaktionsgemisch wird bei 100°C solange gerührt, bis mit einer Lösung von 5 % Natriumbutylat in Butanol kein Wasserstoff mehr freigesetzt wird. Das Produkt wird unter vermindertem Druck bis 100°C destilliert. Es werden 2286 g (90 % der Theorie) eines leicht gelblichen mittelviskosen Produktes erhalten, das nach dem $^1$H-NMR die durchschnittliche Formel

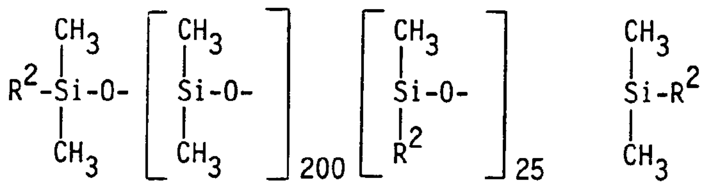

$R^2$ = 26 %

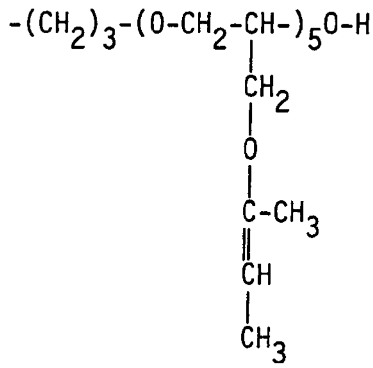

74 %

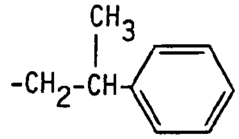

besitzt.

Beispiel 9

In einem Rührbehälter werden 535 g (0,5 Mol) einer Verbindung, die nach dem $^1$H-NMR die durchschnittliche Formel

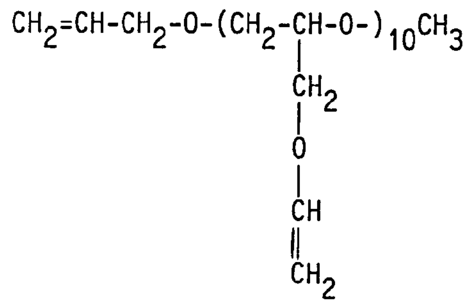

besitzt, mit 30 mg (5 ppm Platin, bezogen auf den Gesamtansatz) Hexachloroplatinsäure x 6 $H_2O$ vorgelegt und während 2 Stunden bei 120°C 1700 g (0,1 Mol) eines Siloxans der durchschnittlichen Formel

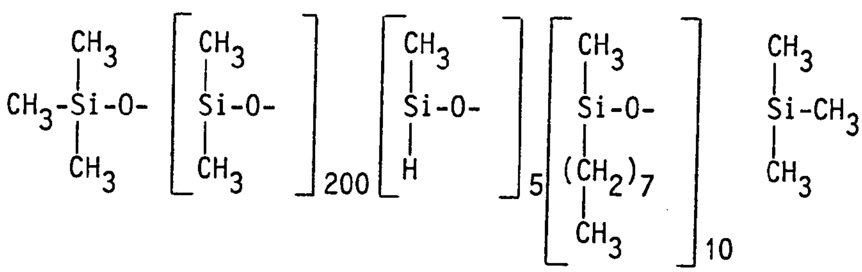

zugetropft. Das Reaktionsgemisch wird bei 100°C solange gerührt, bis mit einer Lösung von 5 % Natriumbutylat in Butanol kein Wasserstoff mehr freigesetzt wird. Das Produkt wird unter vermindertem Druck bis 100°C destilliert. Es werden 2123 g (95 % der Theorie) eines leicht gelblichen mittelviskosen Produktes erhalten, das nach dem $^1H$-NMR die durchschnittliche Formel

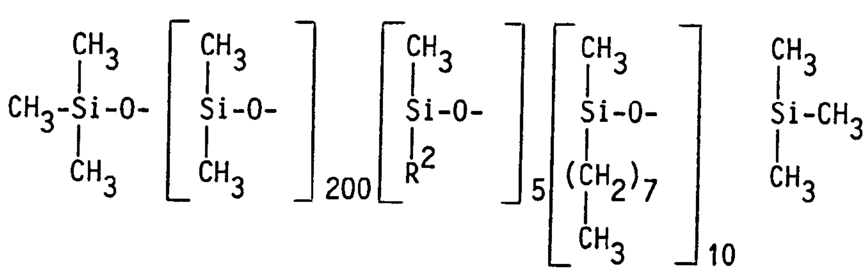

mit

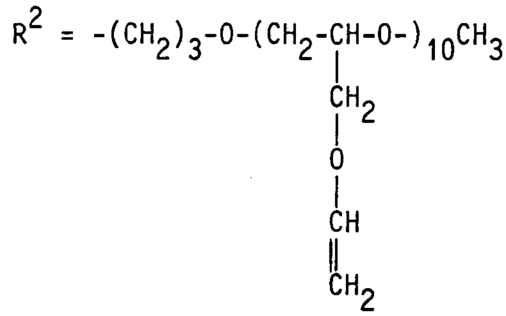

besitzt.

Beispiel 10

In einem Rührbehälter werden 2140 g (2 Mol) einer Verbindung, die nach dem $^1H$-NMR die durchschnittliche Formel

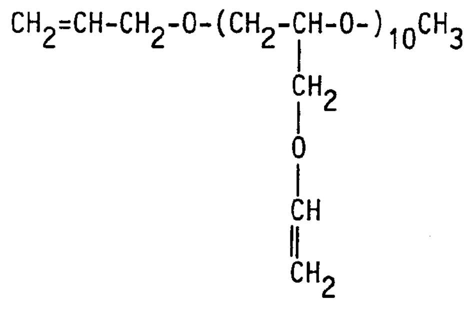

besitzt, mit 71 mg (5 ppm Platin, bezogen auf den Gesamtansatz) Hexachloroplatinsäure x 6 $H_2O$ vorgelegt und während 2 Stunden bei 120°C 3126 g (0,1 Mol) eines Siloxans der durchschnittlichen Formel

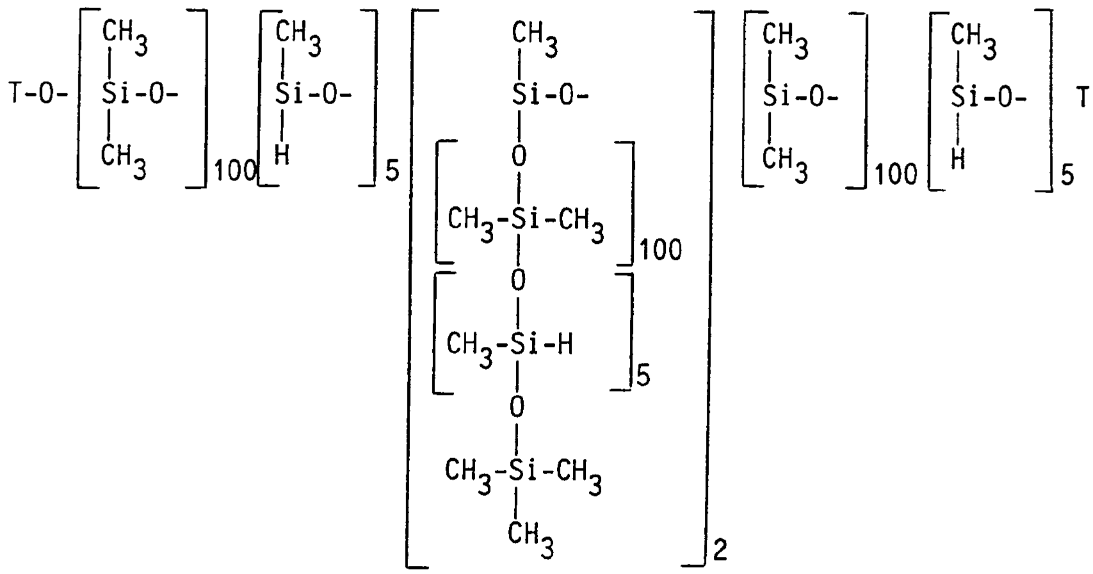

T = $(CH_3)_3Si$-

zugetropft. Das Reaktionsgemisch wird bei 100°C solange gerührt, bis mit einer Lösung von 5 % Natriumbutylat in Butanol kein Wasserstoff mehr freigesetzt wird. Das Produkt wird unter vermindertem Druck bis 100°C destilliert. Es werden 4792 g (91 % der Theorie) eines leicht gelblichen viskosen Produktes erhalten, das nach dem $^1$H-NMR die durchschnittliche Formel

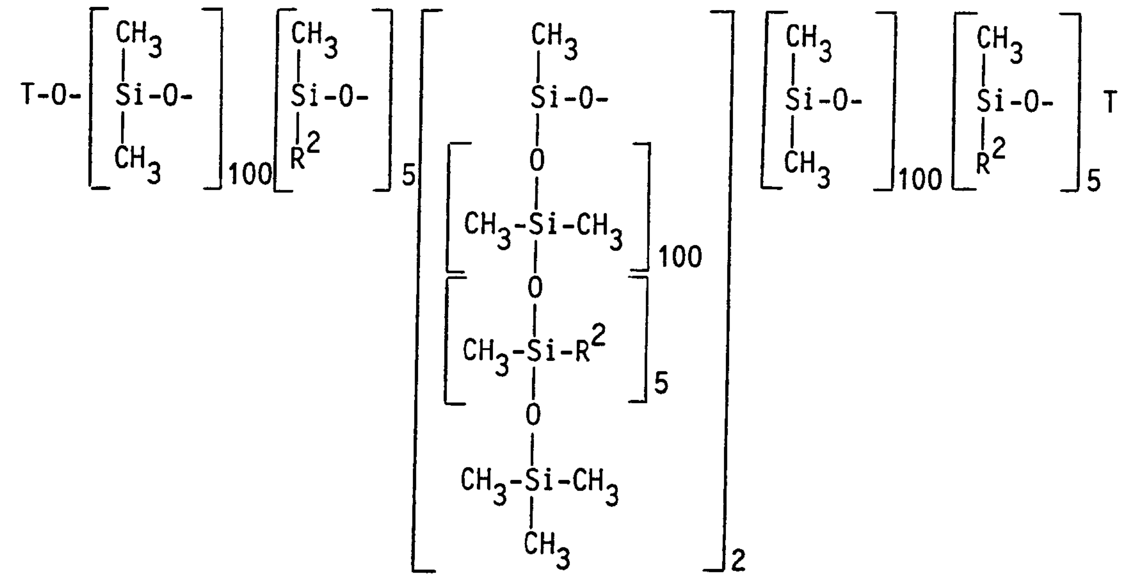

$T = (CH_3)_3Si-$

mit

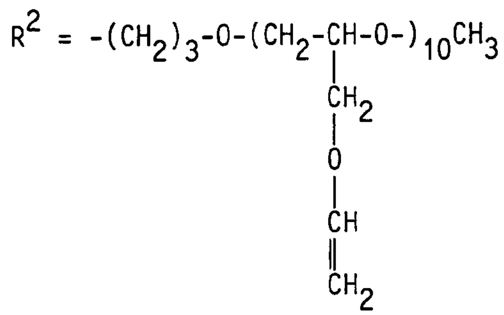

besitzt.

Anwendungstechnische Prüfung

Zur Überprüfung der anwendungstechnischen Eigenschaften der erfindungsgemäß modifizierten Polysiloxane werden die Produkte der Beispiele 1 bis 11 mit 2 Gew.-% Bis(dodecylphenyl)iodoniumhexafluorophosphat gut gemischt und auf unterschiedliche flächige Träger (orientierte Polypropylenfolie, satiniertes Papier) aufgetragen. Die Aushärtung erfolgt mittels einer UV-Lampe der Firma Fusion Systems Corporation, Rockville, MD, USA, Modell I 300 B, bei einer Bahngeschwindigkeit von 25 m/Min., im Abstand von 53 mm in normaler Umgebungsluft. Die Auftragsmenge beträgt in jedem Falle ca. 1,1 g/m².

Für die Vergleichsversuche werden verschiedene, 30 mm breite Klebebänder verwendet, und zwar mit Acrylatklebern beschichtete Klebebänder, die im Handel unter der Bezeichnung Tesa® 154 und Tesa® 970 erhältlich sind.

Zur Messung der Abhäsivität werden diese Klebebänder auf den Untergrund aufgewalzt und anschließend bei 70°C gelagert. Nach 24 Stunden wird die Kraft gemessen, die benötigt wird, um das jeweilige Klebeband in einem Schälwinkel von 180° vom Untergrund abzuziehen. Diese Kraft wird als Trennkraft bezeichnet. Außerdem erfolgt eine Prüfung der Adhäsion der modifizierten Polysiloxane durch kräftiges Reiben mit dem Daumen. Bei mangelnder Haftung bilden sich gummiartige Krümel (sogenannter "Rub off"-Test).

In einer weiteren Testreihe wird der Photoinitiator Bis(dodecylphenyl)iodoniumhexafluoroantimonat durch 2 Gew.-% 2-Methyl-2-(4-methylphenylsulfonyl)-4-dodecylphenylpropiophenon ersetzt. Die anwendungstechnische Prüfung erfolgt wie in der ersten Testreihe. Die Werte sind in Klammern angegeben.

Tabelle

| modifiziertes Siloxan nach Beispiel | satiniertes Papier Tesa® 154 Trennkraft [N] | satiniertes Papier Tesa® 970 Trennkraft [N] | satiniertes Papier Rub off | orientierte Polypropylenfolie Tesa® 154 Trennkraft [N] | orientierte Polypropylenfolie Tesa® 970 Trennkraft [N] | orientierte Polypropylenfolie Rub off |
|---|---|---|---|---|---|---|
| 1 | 6 (5) | 10 (9) | n | 5 (5) | 10 (9) | n |
| 2 | 0,6 (0,6) | 1,3 (1,4) | n | 0,5 (0,5) | 1,3 (1,4) | n |
| 3 | 4 (4) | 8 (8) | n | 4 (4) | 8 (8) | n |
| 4 | 1 (1) | 3 (3) | j | 1 (1) | 3 (3) | j |
| 5 | 1 (1) | 2,5 (2) | n | 1 (1) | 2 (2) | n |
| 6 | 0,5 (0,5) | 1,5 (2) | n | 0,5 (0,5) | 1,3 (2) | n |
| 7 | 2 (2) | 4 (4) | n | 2 (2) | 4 (4) | n |
| 8 | 6 (6) | 10 (9) | n | 6 (5) | 9 (9) | n |
| 9 | 5 (5) | 9 (9) | n | 5 (5) | 9 (9) | n |
| 10 | 0,5 (0,5) | 2 (2) | n | 0,5 (0,5) | 1,5 (2) | n |

## Patentansprüche

1. Härtbare Organopolysiloxane mit über SiC-Gruppen gebundenen Oxyalkylenethergruppen der allgemeinen durchschnittlichen Formel

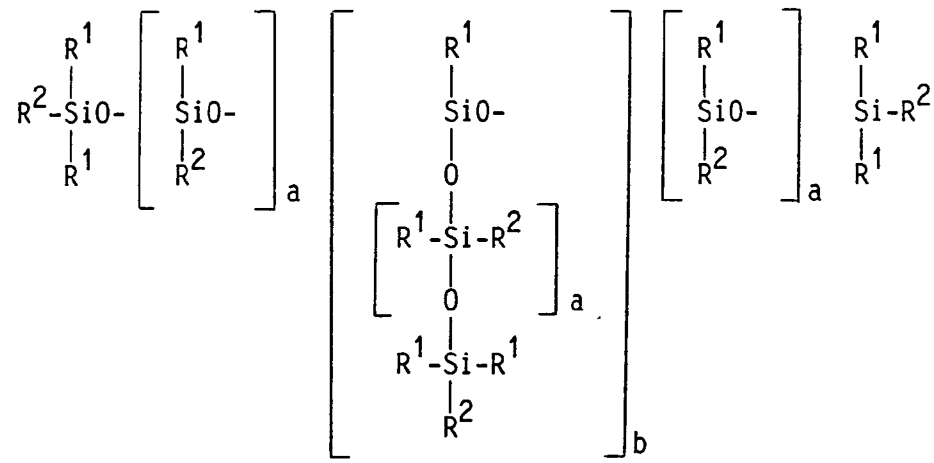

I

wobei die Reste

$R^1$ gleich oder verschieden sind und Alkylreste mit 1 bis 4 Kohlenstoffatomen oder Phenylreste bedeuten, jedoch mindestens 90 % der Reste $R^1$ Methylreste sind,

$R^2$ gleich oder verschieden sind und folgende Bedeutung haben:

a) Alkylreste mit 1 bis 20 Kohlenstoffatomen, Aryl- oder Aralkylreste,

b) Oxyalkylenetherreste der allgemeinen Formel

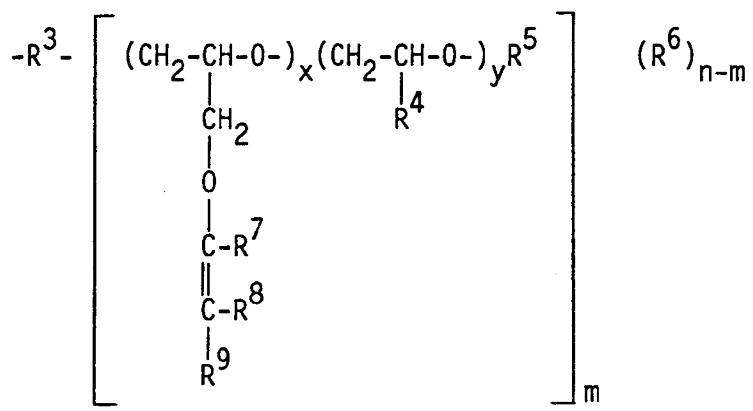

II

wobei

$R^3$ ein (n+1)-wertiger Rest ist, welcher mit einem Siliciumatom des Organopolysiloxans über eine -Si-C-Bindung und mit m Polyetherresten über jeweils eine -C-C-,

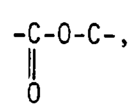

-C-O-C- oder -C-N-C-Bindung verknüpft ist,

$R^4$ ein Wasserstoff-, Alkyl- oder $R^5OCH_2$-Rest,

$R^5$, $R^6$ ein Wasserstoff-, Alkyl- oder Acylrest ist, wobei die Reste $R^4$, $R^5$ und $R^6$ im Molekül unterschiedliche Bedeutung haben können,

$R^7$, $R^8$ und $R^9$ Wasserstoff- oder Alkylreste mit 1 bis 8 Kohlenstoffatomen sind oder wobei die Re-

ste $R^7$ und $R^8$ oder $R^8$ und $R^9$ jeweils gemeinsam Bestandteil eines cyclischen, nichtaromatischen Kohlenwasserstoffrestes mit 5 oder 6 Kohlenstoffatomen sein können,

n einen Wert von 1 bis 5 hat,

m einen Wert von 1 bis 5 hat, jedoch nicht größer als n sein darf,

x im durchschnittlichen Molekül einen Wert von 1 bis 100 und

y im durchschnittlichen Molekül einen Wert von 0 bis 100 hat, wobei $1 \leqq x+y < 150$ ist,

a einen Wert von 1 bis 1000 und

b einen Wert von 0 bis 10 hat,

mit der Maßgabe, daß im durchschnittlichen Organopolysiloxanmolekül mindestens 1 Rest $R^2$ ein Oxyalkylenetherrest der Formel II ist.

**2.** Polysiloxane nach Anspruch 1, dadurch gekennzeichnet, daß $R^3$ bei einer Verknüpfung mit den Polyetherresten

i) durch eine -C-C-Bindung
ein geradkettiger oder verzweigter Kohlenwasserstoffrest ist,

ii) durch eine -C-O-C-Bindung
ein Kohlenwasserstoffoxyrest mit bis zu 5 Oxyresten, wobei die Kohlenstoffkette durch Sauerstoff unter Etherbildung unterbrochen sein kann, ist,

iii) durch eine

$$-\underset{\underset{O}{\|}}{C}-O-C-\text{Bindung}$$

ein Kohlenwasserstoffcarboxyrest mit bis zu 3 Carboxygruppen ist,

iv) durch eine -C-N-C-Bindung
ein Kohlenwasserstoffrest mit einem mono- oder disubstituierten Aminorest ist,

wobei in jedem Falle ein Kohlenstoffatom des Kohlenwasserstoffrestes mit einem Si-Atom des Polysiloxans verbunden ist.

**3.** Polysiloxane nach Anspruch 1 oder 2, dadurch gekennzeichnet, daß im durchschnittlichen Polysiloxanmolekül 1 bis 30 Oxyalkylenetherreste enthalten sind.

**4.** Polysiloxane nach einem oder mehreren der vorhergehenden Ansprüche, dadurch gekennzeichnet, daß a einen Wert von 5 bis 200 und b einen Wert von 0 bis 2 hat.

**5.** Polysiloxane nach Anspruch 4, dadurch gekennzeichnet, daß b einen Wert von 0 hat.

**6.** Polysiloxane nach einem oder mehreren der vorhergehenden Ansprüche, dadurch gekennzeichnet, daß mindestens einer der Reste $R^7$, $R^8$ und $R^9$ ein Alkylrest ist.

**7.** Polysiloxane nach Anspruch 6, dadurch gekennzeichnet, daß der Rest $R^8$ und/oder der Rest $R^9$ ein Alkylrest und der Rest $R^7$ ein Wasserstoffrest ist.

**8.** Polysiloxane nach Anspruch 7, dadurch gekennzeichnet, daß der Rest $R^9$ ein Methylrest ist und die Reste $R^7$ und $R^8$ Wasserstoffreste sind.

**9.** Polysiloxane nach einem oder mehreren der Ansprüche 1 bis 5, dadurch gekennzeichnet, daß $R^7$ und $R^8$ gemeinsamer Bestandteil eines cyclischen, nichtaromatischen Kohlenwasserstoffrestes mit 5 oder 6 Kohlenstoffatomen sind und $R^9$ ein Wasserstoffrest ist.

**10.** Polysiloxane nach einem oder mehreren der vorhergehenden Ansprüche, dadurch gekennzeichnet, daß $1 < x+y < 150$ ist.

**11.** Polysiloxane nach einem oder mehreren der vorhergehenden Ansprüche, dadurch gekennzeichnet, daß $m \cdot x > 1$ ist.

**12.** Polysiloxane nach einem oder mehreren der vorhergehenden Ansprüche, dadurch gekennzeichnet, daß der Wert von $m \cdot x = 2$ bis 25 und der Wert von $m \cdot y = 0$ bis 25 ist.

**13.** Polysiloxane nach einem oder mehreren der vorhergehenden Ansprüche, dadurch gekennzeichnet, daß x einen Wert von 1 bis 25 hat.

**14.** Polysiloxane nach Anspruch 12, dadurch gekennzeichnet, daß x einen Wert von 2 bis 4 hat.

**15.** Polysiloxane nach einem oder mehreren der vorhergehenden Ansprüche, dadurch gekennzeichnet, daß $R^4$ ein Wasserstoff-, Methyl-, Ethyl-, $HOCH_2$- oder $CH_3OCH_2$-Rest ist.

**16.** Verfahren zur Herstellung der Polysiloxane nach einem oder mehreren der vorhergehenden Ansprüche, dadurch gekennzeichnet, daß man einen Polyoxyalkylenether der allgemeinen Formel

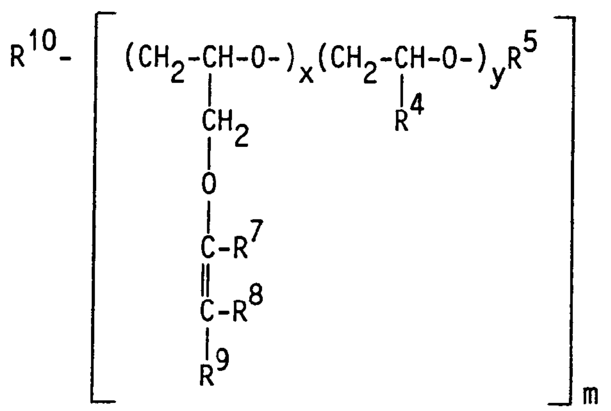 III

wobei

$R^{10}$ ein n-wertiger Rest mit einer zur Anlagerung an eine SiH-Gruppe befähigten olefinischen Doppelbindung ist, der mit m Polyetherresten über jeweils eine -C-C-, -C-O-C-,

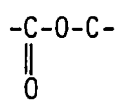

oder -C-N-C-Bindung verknüpft ist, und

$R^4$, $R^5$, $R^6$, $R^7$, $R^8$, $R^9$, n, m, x und y die bereits angegebene Bedeutung bzw. Werte haben, an ein Polysiloxan der allgemeinen Formel

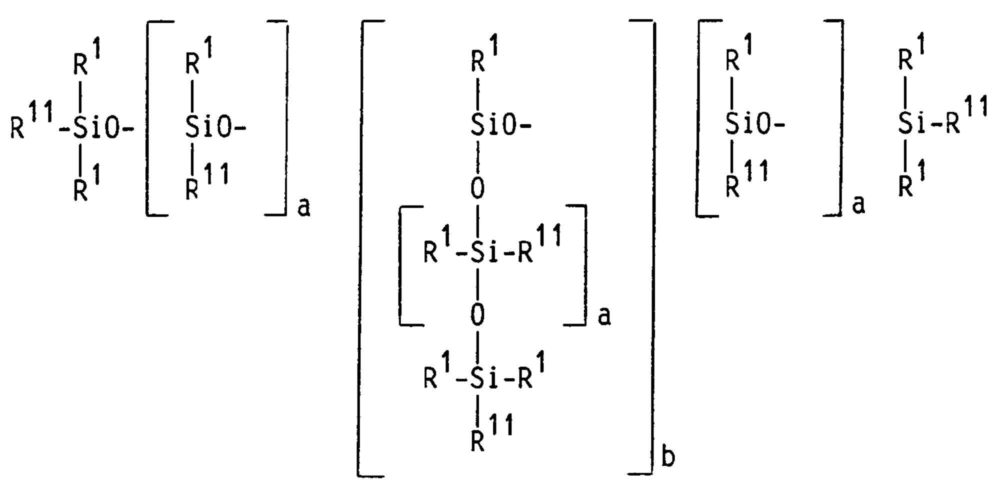 IV

wobei die Reste

$R^1$ gleich oder verschieden sind und Alkylreste mit 1 bis 4 Kohlenstoffatomen oder Phenylreste bedeuten, jedoch mindestens 90 % der Reste $R^1$ Methylreste sind,

$R^{11}$ gleich oder verschieden sind und folgende Bedeutung haben:

a) Alkylreste mit 1 bis 20 Kohlenstoffatomen oder Aryl- oder Alkarylreste,

b) Wasserstoffreste,

mit der Maßgabe, daß im durchschnittlichen Organopolysiloxanmolekül mindestens 1 Rest $R^{11}$ ein Wasserstoffatom ist,

die Indices a und b die bereits angegebenen Werte haben,

in Gegenwart von Übergangsmetallen oder Übergangsmetallkomplexen bei Temperaturen von etwa 25 bis 170°C gegebenenfalls in Gegenwart von Lösungsmitteln anlagert.

**17.** Verfahren zur Herstellung der Polysiloxane nach Anspruch 16, dadurch gekennzeichnet, daß in dem Polyether der Formel III der Rest $R^{10}$ bei einer Verknüpfung mit den Polyetherresten

i) durch eine -C-C-Bindung

ein geradkettiger oder verzweigter Kohlenwasserstoffrest ist,

ii) durch eine -C-O-C-Bindung

ein Kohlenwasserstoffoxyrest mit bis zu 5 Oxyresten, wobei die Kohlenstoffkette durch Sauerstoff unter Etherbildung unterbrochen sein kann, ist,

iii) durch eine

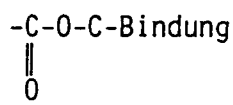

ein Kohlenwasserstoffcarboxyrest mit bis zu 3 Carboxygruppen ist,

iv) durch eine -C-N-C-Bindung

ein Kohlenwasserstoffrest mit einem mono- oder disubstituierten Aminorest ist,

wobei in jedem Falle der Kohlenwasserstoffrest eine zur Anlagerung an SiH befähigte olefinische Doppelbindung aufweist.

**18.** Verwendung der härtbaren Polysiloxane nach einem oder mehreren der Ansprüche 1 bis 16 als vorzugsweise photochemisch härtbare Polysiloxane in Vergußmassen, als abhäsive Beschichtungsmittel für flächige Träger oder als modifizierendes Additiv in radikalisch, kationisch oder durch UV- oder Elektronenstrahlen härtbare Verbindungen.

## Claims

**1.** Curable organopolysiloxanes containing oxyalkylene ether groups bonded via SiC groups, of the general average formula

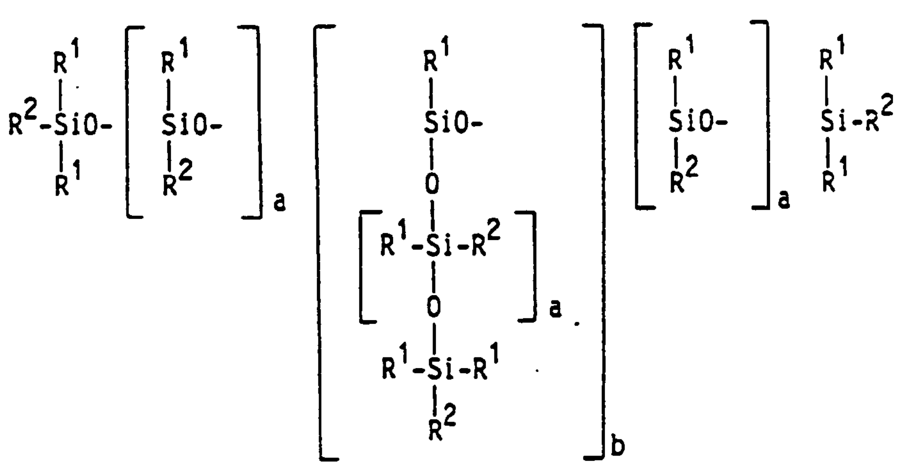

I

where the radicals

$R^1$ are identical or different and are alkyl radicals having 1 to 4 carbon atoms or phenyl radicals, but at least 90 % of the radicals $R^1$ are methyl radicals,

$R^2$ are identical or different and have the following meaning:

a) alkyl radicals having 1 to 20 carbon atoms, aryl or aralkyl radicals,

b) oxyalkylene ether radicals of the general formula

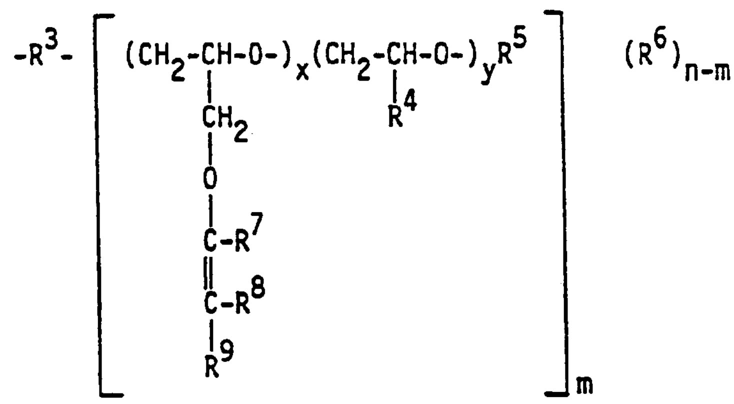

II

where

$R^3$ is an (n+1)-valent radical which is linked to a silicon atom of the organopolysiloxane via an -Si-C bond and to m polyether radicals, in each case via a -C-C-,

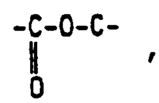

-C-O-C- or -C-N-C-bond,

$R^4$ is a hydrogen, alkyl or $R^5OCH_2$ radical,

$R^5$ and $R^6$ are a hydrogen, alkyl or acyl radical, where the radicals $R^4$, $R^5$ and $R^6$ in the molecule may have different meanings,

$R^7$, $R^8$ and $R^9$ are hydrogen or alkyl radicals having 1 to 8 carbon atoms or where the radicals $R^7$ and $R^8$ or $R^8$ and $R^9$ may each together be a constituent of a cyclic, non-aromatic hydrocarbon radical having 5 or 6 carbon atoms,

n has a value of from 1 to 5,

m has a value of from 1 to 5, but must not be greater than n,

x in the average molecule has a value of from 1 to 100 and

y in the average molecule has a value of from 0 to 100, where $1 \leqq x+y < 150$,

a has a value of from 1 to 1000 and

b has a value of from 0 to 10,

with the proviso that at least one radical $R^2$ in the average organopolysiloxane molecule is an oxyalkylene ether radical of formula II.

**2.** Polysiloxanes according to Claim 1, characterized in that $R^3$

i) is a straight-chain or branched hydrocarbon radical in the case of linking to the polyether radicals via a -C-C- bond,

ii) is a hydrocarbonoxy radical having up to 5 oxy radicals, where the carbon chain may be interrupted by oxygen with formation of an ether, in the case of linking to the polyether radicals via a -C-O-C-bond,

iii) is a hydrocarbocarboxy radical having up to three carboxyl groups in the case of linking to the polyether radicals via a

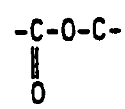

bond,

iv) is a hydrocarbon radical containing a monosubstituted or disubstituted amino radical in the case of linking to the polyether radicals via a -C-N-C-bond,

where, in all cases, a carbon atom of the hydrocarbon radical is bonded to an Si atom of the polysiloxane.

**3.** Polysiloxanes according to Claim 1 or 2, characterized in that the average polysiloxane molecule contains from 1 to 30 oxyalkylene ether radicals.

**4.** Polysiloxanes according to one or more of the preceding claims, characterized in that a has a value of from 5 to 200 and b has a value of from 0 to 2.

**5.** Polysiloxanes according to Claim 4, characterized in that b has a value of 0.

**6.** Polysiloxanes according to one or more of the preceding claims, characterized in that at least one of the radicals $R^7$, $R^8$ and $R^9$ is an alkyl radical.

**7.** Polysiloxanes according to Claim 6, characterized in that the radical $R^8$ and/or the radical $R^9$ is an alkyl radical and the radical $R^7$ is a hydrogen radical.

**8.** Polysiloxanes according to Claim 7, characterized in that the radical $R^9$ is a methyl radical and the radicals $R^7$ and $R^8$ are hydrogen radicals.

**9.** Polysiloxanes according to one or more of Claims 1 to 5, characterized in that $R^7$ and $R^8$ are a joint constituent of a cyclic, non-aromatic hydrocarbon radical having 5 or 6 carbon atoms, and $R^9$ is a hydrogen radical.

**10.** Polysiloxanes according to one or more of the preceding claims, characterized in that $1 < x+y < 150$.

**11.** Polysiloxanes according to one or more of the preceding claims, characterized in that $m \cdot x > 1$.

**12.** Polysiloxanes according to one or more of the preceding claims, characterized in that the value of $m \cdot x$ = 2 to 25 and the value of $m \cdot y$ = 0 to 25.

**13.** Polysiloxanes according to one or more of the preceding claims, characterized in that x has a value from 1 to 25.

**14.** Polysiloxanes according to Claim 12, characterized in that x has a value of from 2 to 4.

**15.** Polysiloxanes according to one or more of the preceding claims, characterized in that $R^4$ is a hydrogen, methyl, ethyl, $HOCH_2$ or $CH_3OCH_2$ radical.

**16.** Process for the preparation of the polysiloxanes according to one or more of the preceding claims, characterized in that a polyoxyalkylene ether of the general formula

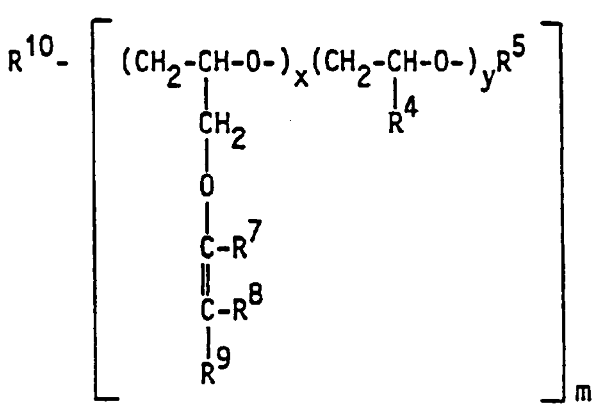

$(R^6)_{n-m}$ III

where

$R^{10}$ is an n-valent radical which contains an olefinic double bond which is capable of addition reaction with an SiH group and which is linked to m polyether radicals, in each case via a -C-C-, -C-O-C-,

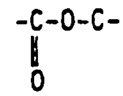

or -C-N-C- bond, and

$R^4$, $R^5$, $R^6$, $R^7$, $R^8$, $R^9$, n, m, x and y are as defined above, is adducted onto a polysiloxane of the general formula

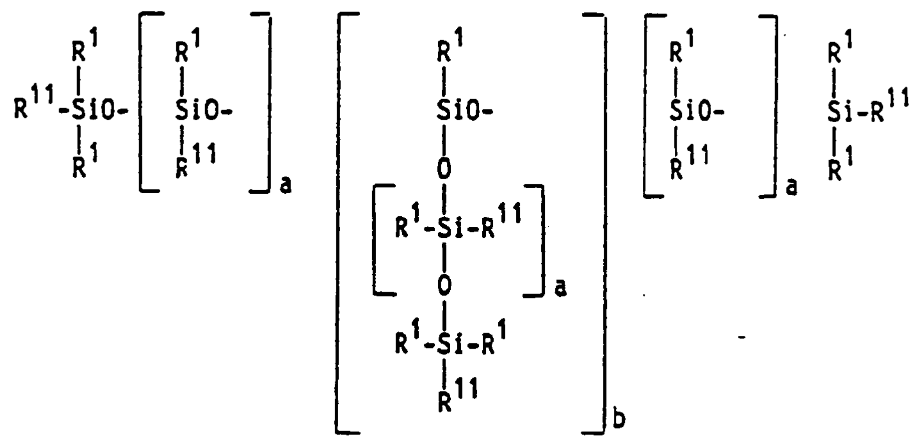

IV

where the radicals

$R^1$ are identical or different and are alkyl radicals having 1 to 4 carbon atoms or phenyl radicals, but at least 90 % of the radicals $R^1$ are methyl radicals,

$R^{11}$ are identical or different and have the following meaning:

a) alkyl radicals having 1 to 20 carbon atoms or aryl or alkaryl radicals,

b) hydrogen radicals, with the proviso that at least one radical $R^{11}$ in the average organopolysiloxane molecule is a hydrogen atom,

the indices a and b are as defined above,

in the presence of transition metals or transition-metal complexes at temperatures of from about 25 to 170°C, optionally in the presence of solvents.

**17.** Process for the preparation of the polysiloxanes according to Claim 16, characterized in that the radical $R^{10}$ in the polyether of formula III, in the case of linking to the polyether radicals

i) is a straight-chain or branched hydrocarbon radical in the case of linking to the polyether radicals via a -C-C- bond,

ii) is a hydrocarbonoxy radical having up to 5 oxy radicals, where the carbon chain may be interrupted by oxygen with formation of an ether, in the case of linking to the polyether radicals via a -C-O-C-bond,

iii) is a hydrocarbocarboxy radical having up to three carboxyl groups in the case of linking to the polyether radicals via a

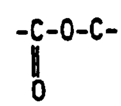

bond,

iv) is a hydrocarbon radical containing a monosubstituted or disubstituted amino radical in the case of linking to the polyether radicals via a -C-N-C-bond,

where, in all cases, the hydrocarbon radical contains an olefinic double bond which is capable of addition reaction with SiH.

18. Use of the curable polysiloxanes according to one or more of Claims 1 to 16 as preferably photochemically curable polysiloxanes in encapsulation compositions, as abhesive coating compositions for sheet-like substrates or as a modifying additive in compounds which can be cured by means of free radicals, cationically or by UV rays or electron beams.

**Revendications**

1. Organopolysiloxanes durcissables contenant des groupes éthers d'oxyalkylène reliés par des groupes SiC, répondant à la formule générale moyenne :

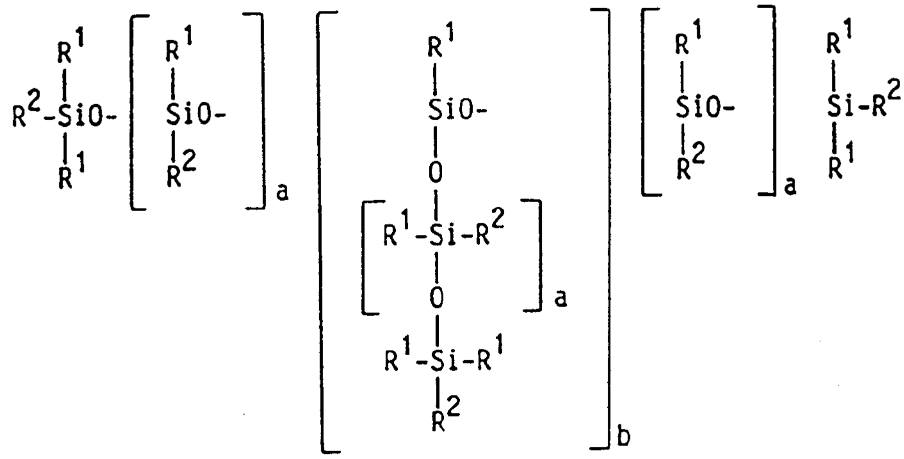

I

où les restes

$R^1$ sont identiques ou différents les uns des autres et signifient des restes alkyle ayant de 1 à 4 atomes de carbone ou des restes phényle, au moins 90 % des restes $R^1$ étant toutefois des restes méthyle,

$R^2$ sont identiques ou différents les uns des autres et ont la signification suivante :

a) restes alkyle ayant de 1 à 20 atomes de carbone, restes aryle ou aralkyle,

b) restes éthers d'oxyalkylène de formule générale :

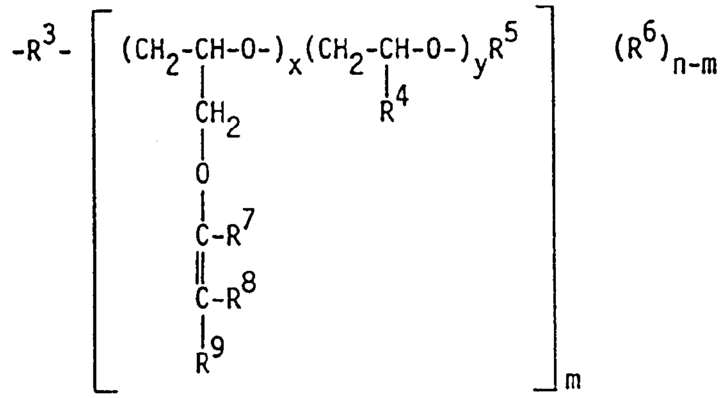

II

où

$R^3$ est un reste de valence (n+1), qui est relié à un atome de silicium de l'organopolysiloxane par l'intermédiaire d'une liaison SiC et à m restes polyéthers par l'intermédiaire d'une liaison -C-C-,

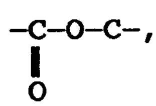

-C-O-C- ou -C-N-C-,

$R^4$ est un atome d'hydrogène ou un reste alkyle ou $R^5OCH_2$, où $R^5$ et $R^6$ signifient chacun un atome d'hydrogène ou un reste alkyle ou acyle, les restes $R^4$, $R^5$ et $R^6$ pouvant avoir des significations différentes dans la molécule,

$R^7$, $R^8$ et $R^9$ signifient chacun un atome d'hydrogène ou un reste alkyle ayant de 1 à 8 atomes de carbone, ou les restes $R^7$ et $R^8$ ou $R^8$ et $R^9$ pris ensemble peuvent être un élément constituant d'un reste d'hydrocarbure cyclique non aromatique ayant 5 ou 6 atomes de carbone,

n vaut de 1 à 5,

m vaut de 1 à 5, mais ne peut pas être supérieur à n,

x vaut de 1 à 100 dans la molécule moyenne, et

y vaut de 0 à 100 dans la molécule moyenne, mais $1 \leqq x+y < 150$,

a vaut de 1 à 1 000, et

b vaut de 0 à 10,

à la condition qu'au moins 1 reste $R^2$, dans la molécule moyenne de l'organopolysiloxane, soit un reste éther d'oxyalkylène de formule II.

**2.** Polysiloxanes selon la revendication 1, caractérisés en ce que $R^3$, lorsqu'il est lié aux restes polyéthers
i) par l'intermédiaire d'une liaison -C-C-,
est un reste hydrocarbure à chaîne droite ou ramifiée,
ii) par l'intermédiaire d'une liaison -C-O-C-,
est un reste oxyhydrocarbure comportant jusqu'à 5 restes oxy, la chaîne carbonée pouvant être interrompue par un atome d'oxygène avec formation d'un éther,
iii) par l'intermédiaire d'une liaison

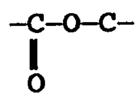

est un reste carboxyhydrocarbure comportant jusqu'à 3 groupes carboxy,
iv) par l'intermédiaire d'une liaison -C-N-C-, est un reste hydrocarbure comportant un reste amino mono- ou disubstitué,
un atome de carbone du reste hydrocarbure étant relié dans tous les cas à un atome de silicium du polysiloxane.

**3.** Polysiloxanes selon la revendication 1 ou 2, caractérisés en ce que la molécule moyenne du polysiloxane contient 1 à 30 restes éthers d'oxyalkylène.

**4.** Polysiloxanes selon une ou plusieurs des revendications précédentes, caractérisés en ce que "a" vaut de 5 à 200 et "b" vaut de 0 à 2.

**5.** Polysiloxanes selon la revendication 4, caractérisés en ce que "b" vaut 0.

**6.** Polysiloxanes selon une ou plusieurs des revendications précédentes, caractérisés en ce qu'au moins un des restes $R^7$, $R^8$ et $R^9$ est un reste alkyle.

**7.** Polysiloxanes selon la revendication 6, caractérisés en ce que le reste $R^8$ et/ou le reste $R^9$ est un reste alkyle, et le reste $R^7$ est un reste d'hydrogène.

**8.** Polysiloxanes selon la revendication 7, caractérisés en ce que le reste $R^9$ est un reste méthyle, et les restes $R^7$ et $R^8$ sont des restes d'hydrogène.

**9.** Polysiloxanes selon une ou plusieurs des revendications 1 à 5, caractérisés en ce que $R^7$ et $R^8$ pris ensemble forment un élément constituant d'un reste hydrocarbure cyclique non aromatique ayant 5 ou 6 atomes de carbone, et $R^9$ est un reste d'hydrogène.

**10.** Polysiloxanes selon une ou plusieurs des revendications précédentes, caractérisés en ce que $1 < x+y <$

150.

**11.** Polysiloxanes selon une ou plusieurs des revendications précédentes, caractérisés en ce que m.x > 1.

**12.** Polysiloxanes selon une ou plusieurs des revendications précédentes, caractérisés en ce que la valeur de m.x = 2 à 25, et la valeur de m.y = 0 à 25.

**13.** Polysiloxanes selon une ou plusieurs des revendications précédentes, caractérisés en ce que x vaut de 1 à 25.

**14.** Polysiloxanes selon la revendication 12, caractérisés en ce que x vaut de 2 à 4.

**15.** Polysiloxanes selon une ou plusieurs des revendications précédentes, caractérisés en ce que $R^4$ est un atome d'hydrogène ou un reste méthyle, éthyle, $HOCH_2$ ou $CH_3OCH_2$.

**16.** Procédé de préparation des polysiloxanes selon une ou plusieurs des revendications précédentes, caractérisé en ce qu'on fixe par addition un polyéther d'oxyalkylène de formule générale

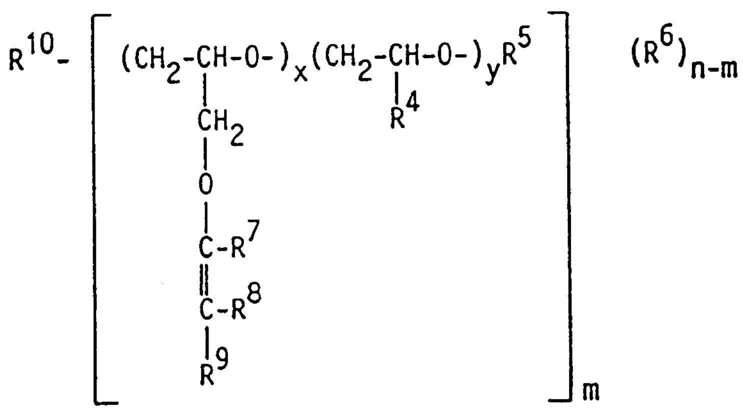

III

où

$R^{10}$ est un reste de valence n, comportant une liaison double oléfinique permettant une fixation par addition sur un groupe SiH, qui est lié à m restes polyéthers par l'intermédiaire d'une liaison -C-C-, -C-O-C-,

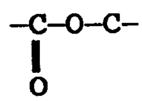

ou -C-N-C-, et

$R^4$, $R^5$, $R^6$, $R^7$, $R^8$, $R^9$, n, m, x et y ont la signification ou les valeurs déjà indiquées, sur un polysiloxane de formule générale

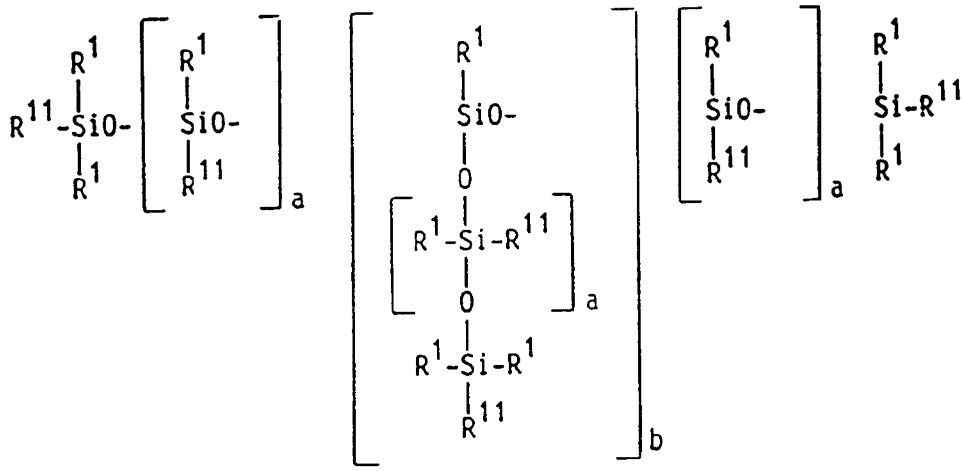

IV

où les restes

$R^1$ sont identiques ou différents les uns des autres et signifient des restes alkyle ayant de 1 à 4 atomes de carbone ou des restes phényle, au moins 90 % des restes $R^1$ étant toutefois des restes méthyle,

$R^{11}$ sont identiques ou différents les uns des autres et ont la signification suivante :

a) restes alkyle ayant de 1 à 20 atomes de carbone, restes aryle ou aralkyle,

b) restes d'hydrogène,

à la condition qu'au moins 1 reste $R^{11}$ dans la molécule moyenne d'organopolysiloxane soit un atome d'hydrogène, et les indices a et b ont les valeurs déjà indiquées, en présence de métaux de transition ou de complexes de métaux de transition, à des températures d'environ 25 à 170°C, éventuellement en présence de solvants.

**17.** Procédé de préparation des polysiloxanes selon la revendication 16, caractérisé en ce que, dans le polyéther de formule III, le reste $R^{10}$, lorsqu'il est relié aux restes polyéthers

i) par l'intermédiaire d'une liaison -C-C-,
est un reste hydrocarbure à chaîne droite ou ramifiée,

ii) par l'intermédiaire d'une liaison -C-O-C-,
est un reste oxyhydrocarbure comportant jusqu'à 5 restes oxy, la chaîne carbonée pouvant être interrompue par un atome d'oxygène avec formation d'un éther,

iii) par l'intermédiaire d'une liaison

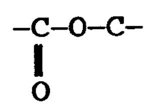

est un reste carboxyhydrocarbure comportant jusqu'à 3 groupes carboxy,

iv) par l'intermédiaire d'une liaison -C-N-C-, est un reste hydrocarbure comportant un reste amino mono- ou disubstitué,

le reste hydrocarbure présentant dans tous les cas une liaison double oléfinique capable d'une fixation par addition sur un groupe SiH.

**18.** Utilisation des polysiloxanes durcissables selon une ou plusieurs des revendications 1 à 16, de préférence en tant que polysiloxanes à durcissement photochimique dans des masses de scellement, comme agents de revêtement anti-adhésif pour des supports disposés à plat, ou comme additif modificateur dans des composés à durcissement radicalaire, cationique ou par rayonnement UV ou par bombardement électronique.